# EUROPEAN PATENT APPLICATION

(11) **EP 0 851 719 A2**
(43) Date of publication of application: **01.07.1998**
(21) Application number: 97310472.2
(22) Date of filing: 22.12.1997
(51) Int. Cl.: H05B 41/29

(54) **Power supply device and discharge lamp lighting device**

(30) Priority: 25.12.1996 JP 346233/96; 26.12.1996 JP 348290/96
(71) Applicant: Kabushiki Kaisha TEC, Tagata-gun, Shizuoka-ken (JP)
(72) Inventor: Sugiyama, Masahiro, Mishima-shi, Shizuoka (JP); Hiraoka, Toshiyuka, Mishima-shi, Shizuoka (JP); Kubota, Hiroshi, Mishima-shi, Shizuoka (JP); Takeda, Takafumi, Mishima-shi, Shizuoka (JP); Yamamoto, Kazuyuki, Mishima-shi, Shizuoka (JP)
(74) Representative: BATCHELLOR, KIRK & CO.

(57) **Abstract**

A power supply device and a discharge lamp lighting device which are capable of reducing high harmonic elements and improving a crest factor.

A full-wave rectifying circuit 1 is connected to a commercial AC power supply, and a first condenser C1 having a larger capacity, a diode D1 and second condenser C2 having a smaller capacity are connected to the full-wave rectifying circuit 1. A partially smoothed circuit consisting of a charge condenser C3, an inductor L1 and a diode D2 is connected to the second condenser C2. A parallel resonance circuit 4 and a collector-emitter of a transistor Q1 are connected to the partially smoothed circuit, the parallel resonance circuit 4 consisting of a primary winding Trla of an inverter transformer Tr1 and a first resonance condenser C4. A second resonance condenser c5 is disposed between and connected to the emitter and the collector of the transistor Q1. Filaments FL1,FL2 of a fluorescent lamp FL are connected to a secondary winding Trlb of the inverter transformer Tr1, and a starting condenser C6 is connected to the filaments FL1,FL2.

## Description

The present invention relates to a power supply device and a discharge lamp lighting device.

An example of conventional discharge lamp lighting devices of this type is disclosed in Japanese Patent Laid-open No. 211774-1993, wherein a full-wave rectifying circuit is connected to a commercial AC power supply, and a parallel resonance circuit, which comprises a resonance condenser and an inverter transformer, and a transistor are connected in series with an output terminal of the full-wave rectifying circuit, thereby forming an inverter circuit. In addition, a partially smoothing circuit which includes a series circuit comprising a charge condenser, an inductor and a first diode, and also includes a second diode disposed between and connected the first diode and the transistor is connected to the full-wave rectifying circuit, while a fluorescent lamp is connected to the inverter transformer.

With the configuration as above, the fluorescent lamp is adapted to be turned on with high-frequency AC current by means of high frequency switching of the transistor, thereby inducing high frequency AC voltage on the inverter transformer.

When the transistor is turned on in the range where the voltage on the full-wave rectifying circuit is high, the charge condenser is charged through the circuit formed by the full-wave rectifying circuit, the charge condenser, the second diode, the transistor and back to the full-wave rectifying circuit. When the transistor is turned off, the magnetic energy of the inductor continues to flow through the second diode. When the magnetic energy of the inductor is discharged, the second diode is turned off so that the voltage on the transistor is applied to the second diode. At that time, according to the proportion of on-duty of the transistor, a voltage lower than the output voltage of the full-wave rectifying circuit is charged into the charge condenser. When the input voltage becomes lower than the charging voltage on the charge condenser, the charge condenser discharges the charged energy through the first diode and the inductor to the inverter circuit. Thus, a voltage which is virtually a DC voltage is supplied to the inverter circuit, with its power factor improved to approximately 0.9.

Due to an insufficient voltage from the charge condenser and the partially smoothed circuit, however, the discharge lamp lighting device disclosed in Japanese Patent Laid-open No. 211774-1993 presents some problem in its crest factor.

Furthermore, when the transistor was switched off in the range where the charge condenser is charged, the magnetic energy of the inductor permits the current which flowed through the inductor and charged the charge condenser to flow through the inductor, the second diode, the resonance condenser and the charge condenser. Therefore, energy which is not the oscillation energy of the inverter circuit flows into the resonance condenser. When the second diode is in the 'on' state, the voltage on the first diode is equal to the voltage on the transistor, and the voltage minus the charge voltage on the charge condenser is applied to the inductor. Therefore, as it is necessary to increase the voltage resistance capacities of these elements, the conventional device described above presents another problem in that reducing the size of the device is difficult.

The present invention includes a rectifying means for rectifying alternating current from an AC power supply; a first condenser connected in parallel with an input terminal of the rectifying means; a diode connected in series in the normal polarity with an end of said first condenser; a second condenser connected in parallel with the first condenser through the diode; a partially smoothed circuit which includes an inductance element and a charge condenser and is connected in parallel with said second condenser, the second condenser adapted to charge said charge condenser at a voltage lower than the maximum instantaneous voltage output from the rectifying means; and an inverter circuit which includes a parallel resonance circuit, a switching element and a second resonance condenser and is connected in parallel with said partially smoothed circuit, said parallel resonance circuit having a first resonance condenser and a resonance inductor, said switching element connected in series with the parallel resonance circuit, the second resonance condenser connected in parallel with the switching element, and thus structured inverter circuit adapted to generate high frequency voltage by means of switching actions of the switching element.

With the configuration as above, by feeding input current from the first and second condensers when the output level of the rectifying means is equivalent to or higher than the charge level on the charge condenser, and feeding current from the partially smoothed circuit when the output level of the rectifying means is lower than the charge level on the charge condenser, the inverter circuit causes the parallel resonance circuit and the second resonance condenser to resonate by means of switching actions of the switching element, thereby reducing high harmonics. Furthermore, by permitting the resonance current to flow into the second condenser, the inverter circuit produces high frequency output having an improved crest factor.

According to another feature thereof, the invention includes a first condenser connected to an AC power supply; a rectifying means connected to the first condenser; a second condenser connected to the rectifying means; a partially smoothed circuit which includes an inductance element and a charge condenser and is connected in parallel with said second condenser, the second condenser adapted to charge said charge condenser at a voltage lower than the maximum instantaneous voltage output from the rectifying means; and an inverter circuit which includes a parallel resonance circuit, a switching element and a second resonance condenser and is connected in parallel with said partially smoothed circuit, said parallel resonance circuit having a first resonance condenser and a resonance inductor, said switching element connected in series with the parallel resonance circuit, the second resonance condenser connected in parallel with the switching element, and thus structured inverter circuit adapted to generate high frequency voltage by means of switching actions of the switching element.

With the configuration as above, by feeding input current from the first and second condensers when the output level of the rectifying means is equivalent to or higher than the charge level on the charge condenser, and feeding current from the partially smoothed circuit when the output level of the rectifying means is lower than the charge level on the charge condenser, the inverter circuit causes the parallel resonance circuit and the second resonance condenser to resonate by means of switching actions of the switching element, thereby reducing high harmonics. Furthermore, by permitting the resonance current to flow into the second condenser, the inverter circuit produces high frequency output having an improved crest factor.

According to yet another feature thereof, the present invention includes a rectifying means for rectifying alternating current from an AC power supply; a first condenser connected in parallel with an input terminal of the rectifying means; a diode connected to said first condenser; a second condenser connected in parallel with the diode; a partially smoothed circuit which includes an inductance element and a charge condenser and is connected in parallel with said first condenser through said second condenser and the diode, the second condenser adapted to charge said charge condenser at a voltage lower than the maximum instantaneous voltage output from the rectifying means; and an inverter circuit which includes a parallel resonance circuit, a switching element and a second resonance condenser and is connected in parallel with said partially smoothed circuit, said parallel resonance circuit having a first resonance condenser and a resonance inductor, said switching element connected in series with the parallel resonance circuit, the second resonance condenser connected in parallel with the switching element, and thus structured inverter circuit adapted to generate high frequency voltage by means of switching actions of the switching element.

With the configuration as above, by feeding input current from the first and second condensers when the output level of the rectifying means is equivalent to or higher than the charge level on the charge condenser, and feeding current from the partially smoothed circuit when the output level of the rectifying means is lower than the charge level on the charge condenser, the inverter circuit causes the parallel resonance circuit and the second resonance condenser to resonate by means of switching actions of the switching element, thereby reducing high harmonics. Furthermore, by permitting the resonance current to flow into the second condenser, the inverter circuit produces high frequency output having an improved crest factor.

According to another feature thereof, the invention includes a short-circuiting means adapted to short-circuit the diode in accordance with an output level of the rectifying means so that a load applied to the switching element can be reduced by changing the resonance point.

According to another feature thereof, the invention includes a capacity varying means for changing the capacity of the second condenser. By optimizing the capacity of the second condenser so that the voltage is reduced to zero in the state where the voltage of the second condenser is low, high harmonics can be further reduced.

According to another feature of the invention, the first resonance condenser and the second resonance condenser have nearly the same capacities so that a further improved waveform is provided.

According to another feature thereof, the invention includes a rectifying means for rectifying alternating current from an AC power supply; an inverter circuit which includes a parallel resonance circuit comprising a resonance condenser and a resonance inductor, and a switching element connected in series with the parallel resonance circuit, said inverter circuit adapted to generate high frequency voltage by means of switching actions of the switching element; and a partially smoothed circuit which includes a series circuit consisting of an inductor, a charge condenser and a first diode, a second diode, and a third diode, the charge condenser adapted to be charged at a voltage lower than the maximum instantaneous voltage output from the rectifying means, the first diode connected in such a polarity as to correspond to that of discharge current from the charge condenser, the second diode disposed between and connected to said switching element and the combination of the inductor and the first diode in such a polarity as to permit current for charging the charge condenser to flow therethrough, and the third diode connected in parallel with the charge condenser and the inductor in such a polarity as to permit magnetic energy accumulated in the inductor to flow to the charge condenser when the charge condenser is charged.

With the configuration as above, voltage charged on the inductor through the third diode is returned to the charge condenser, and when the switching element is switched off during the charging period of the charge condenser, the magnetic energy of the inductor further charges the charge condenser along the path from the inductor through the third diode to the charge condenser so that electric current flows to the second diode only while the switching element is on during the charging period and that all the voltage generated on the switching element when the switching element is switched off is applied to the second diode. Therefore, as voltage applied to the first diode and the inductor can be thus reduced, the sizes of these components can be reduced through reducing their capacity of withstanding voltage.

According to another feature thereof, the invention includes a rectifying means for rectifying alternating current from an AC power supply; a first condenser connected in parallel with an input terminal of the rectifying means; a diode connected in series in the normal polarity with an end of said first condenser; a second condenser connected in parallel with the first condenser through the diode; an inverter circuit which includes a parallel resonance circuit comprising a resonance condenser and a resonance inductor, and a switching element connected in series with the parallel resonance circuit, said inverter circuit adapted to generate high frequency voltage by means of switching actions of the switching element; and a partially smoothed circuit which includes a series circuit consisting of an inductor, a charge condenser and a first diode, a second diode, and a third diode, the charge condenser adapted to be charged at a voltage lower than the maximum instantaneous voltage output from the rectifying means, the first diode connected in such a polarity as to correspond to that of discharge current from the charge condenser, the second diode disposed between and connected to said switching element and the combination of the inductor and the first diode in such a polarity as to permit current for charging the charge condenser to flow therethrough, and the third diode connected in parallel with the charge condenser and the inductor in such a polarity as to permit magnetic energy accumulated in the inductor to flow to the charge condenser when the charge condenser is charged.

With the configuration as above, by feeding input current from the first and second condensers when the output level of the rectifying means is equivalent to or higher than the charge level on the charge condenser, and feeding current from the partially smoothed circuit when the output level of the rectifying means is lower than the charge level on the charge condenser, the inverter circuit causes the parallel resonance circuit and the second resonance condenser to resonate by means of switching actions of the switching element, thereby reducing high harmonics. Further, voltage charged on the inductor through the third diode is returned to the charge condenser, and when the switching element is switched off during the charging period of the charge condenser, the magnetic energy of the inductor further charges the charge condenser along the path from the inductor through the third diode to the charge condenser so that electric current flows to the second diode only while the switching element is on during the charging period and that all the voltage generated on the switching element when the switching element is switched off is applied to the second diode. Therefore, as voltage applied to the first diode and the inductor can be thus reduced, the sizes of these components can be reduced through reducing their capacity of withstanding voltage.

According to another feature thereof, the invention includes a first condenser connected to an AC power supply; a rectifying means connected to the first condenser; a second condenser connected to the rectifying means; an inverter circuit which includes a parallel resonance circuit comprising a resonance condenser and a resonance inductor, and a switching element connected in series with the parallel resonance circuit, said inverter circuit adapted to generate high frequency voltage by means of switching actions of the switching element; and a partially smoothed circuit which includes a series circuit consisting of an inductor, a charge condenser and a first diode, a second diode, and a third diode, the charge condenser adapted to be charged at a voltage lower than the maximum instantaneous voltage output from the rectifying means, the first diode connected in such a polarity as to correspond to that of discharge current from the charge condenser, the second diode disposed between and connected to said switching element and the combination of the inductor and the first diode in such a polarity as to permit current for charging the charge condenser to flow therethrough, and the third diode connected in parallel with the charge condenser and the inductor in such a polarity as to permit magnetic energy accumulated in the inductor to flow to the charge condenser when the charge condenser is charged.

With the configuration as above, by feeding input current from the first and second condensers when the output level of the rectifying means is equivalent to or higher than the charge level on the charge condenser, and feeding current from the partially smoothed circuit when the output level of the rectifying means is lower than the charge level on the charge condenser, the inverter circuit causes the parallel resonance circuit and the second resonance condenser to resonate by means of switching actions of the switching element, thereby reducing high harmonics. Further, voltage charged on the inductor through the third diode is returned to the charge condenser, and when the switching element is switched off during the charging period of the charge condenser, the magnetic energy of the inductor further charges the charge condenser along the path from the inductor through the third diode to the charge condenser so that electric current flows to the second diode only while the switching element is on during the charging period and that all the voltage generated on the switching element when the switching element is switched off is applied to the second diode. Therefore, as voltage applied to the first diode and the inductor can be thus reduced, the sizes of these components can be reduced through reducing their capacity of withstanding voltage.

According to another feature thereof, the invention includes a rectifying means for rectifying alternating current from an AC power supply; a first condenser connected in parallel with an output terminal of the rectifying means; a diode connected to the first condenser; a second condenser connected in parallel with said diode; an inverter circuit which includes a parallel resonance circuit comprising a resonance condenser and a resonance inductor, and a switching element connected in series with the parallel resonance circuit, said inverter circuit adapted to generate high frequency voltage by means of switching actions of the switching element; and a partially smoothed circuit which includes a series circuit consisting of an inductor, a charge condenser and a first diode, a second diode, and a third diode, the charge condenser adapted to be charged at a voltage lower than the maximum instantaneous voltage output from the rectifying means, the first diode connected in such a polarity as to correspond to that of discharge current from the charge condenser, the second diode disposed between and connected to said switching element and the combination of the inductor and the first diode in such a polarity as to permit current for charging the charge condenser to flow therethrough, and the third diode connected in parallel with the charge condenser and the inductor in such a polarity as to permit magnetic energy accumulated in the inductor to flow to the charge condenser when the charge condenser is charged.

With the configuration as above, by feeding input current from the first and second condensers when the output level of the rectifying means is equivalent to or higher than the charge level on the charge condenser, and feeding current from the partially smoothed circuit when the output level of the rectifying means is lower than the charge level on the charge condenser, the inverter circuit causes the parallel resonance circuit and the second resonance condenser to resonate by means of switching actions of the switching element, thereby reducing high harmonics. Further, voltage charged on the inductor through the third diode is returned to the charge condenser, and when the switching element is switched off during the charging period of the charge condenser, the magnetic energy of the inductor further charges the charge condenser along the path from the inductor through the third diode to the charge condenser so that electric current flows to the second diode only while the switching element is on during the charging period and that all the voltage generated on the switching element when the switching element is switched off is applied to the second diode. Therefore, as voltage applied to the first diode and the inductor can be thus reduced, the sizes of these components can be reduced through reducing their capacity of withstanding voltage.

According to another feature thereof, the invention includes a control circuit adapted to set the frequency at which the inverter circuit is driven so that the frequency is higher when the circuit starts to oscillate than during the normal operating period. By increasing the oscillation frequency of the switching element at the beginning of oscillation compared with the normal frequency, the peak value of the current that flows through the charge condenser, the inductor, the first diode and the switching element is reduced until the charge condenser in the partially smoothed circuit is charged to a given voltage. Thus, stress on the switching element is reduced.

According to another feature thereof, the invention includes an auxiliary charging circuit adapted to charge the charge condenser by the time the inverter circuit initiates oscillation. As the charge condenser is charged by the auxiliary charging circuit before the inverter circuit initiates oscillation, stress on the switching element is reduced.

According to another feature thereof, the invention includes a discharge lamp connected to a power supply device according to the present invention and achieves the same effect as those the corresponding power supply device is capable of.

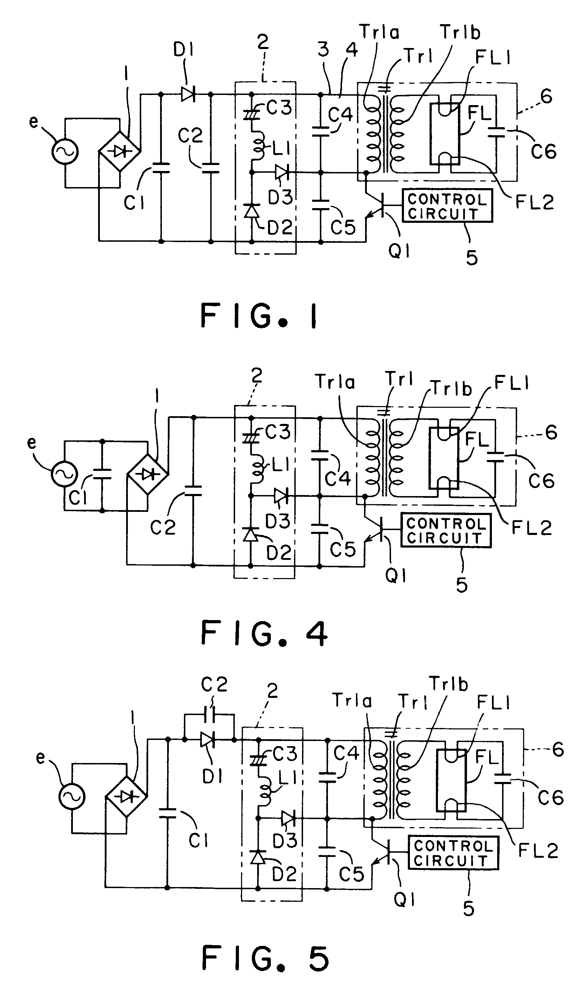

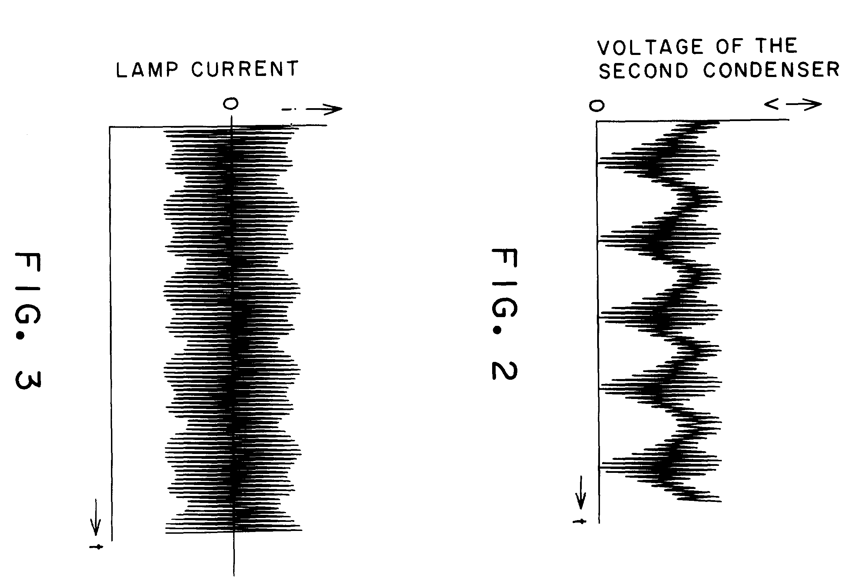

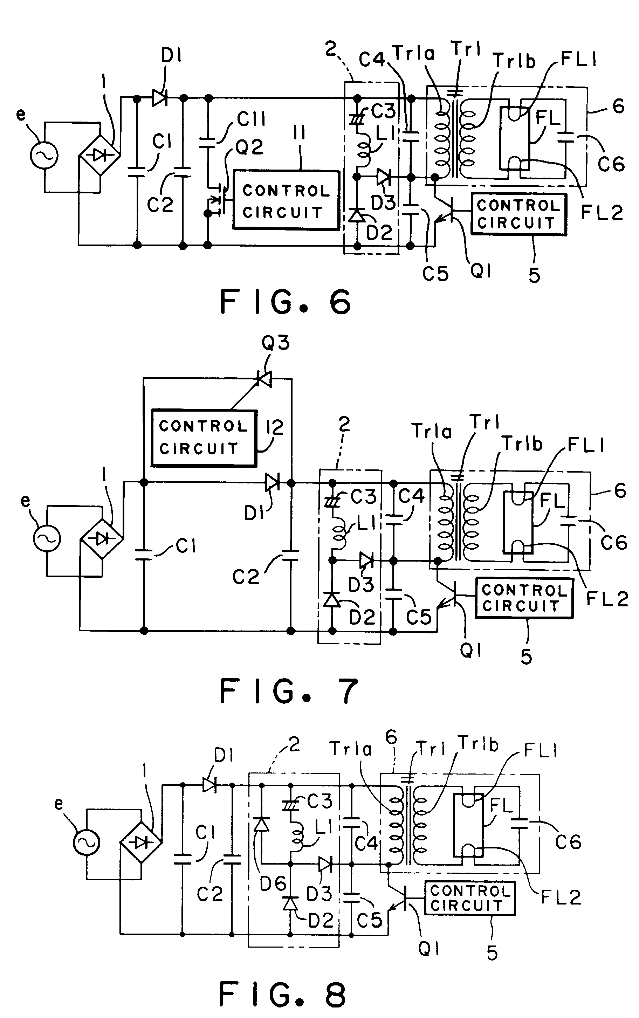

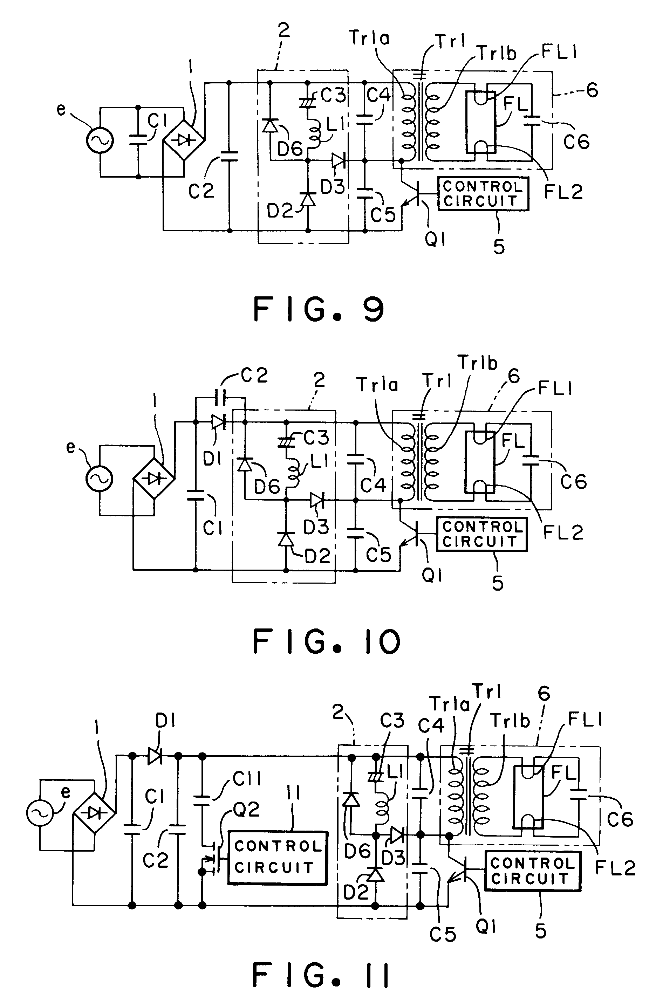

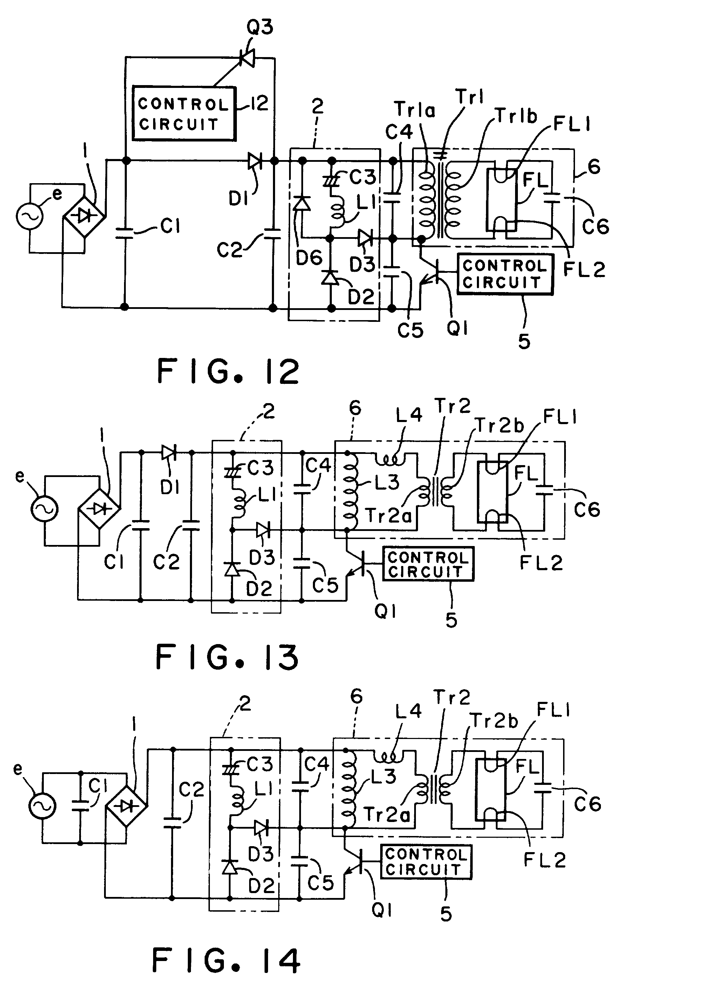

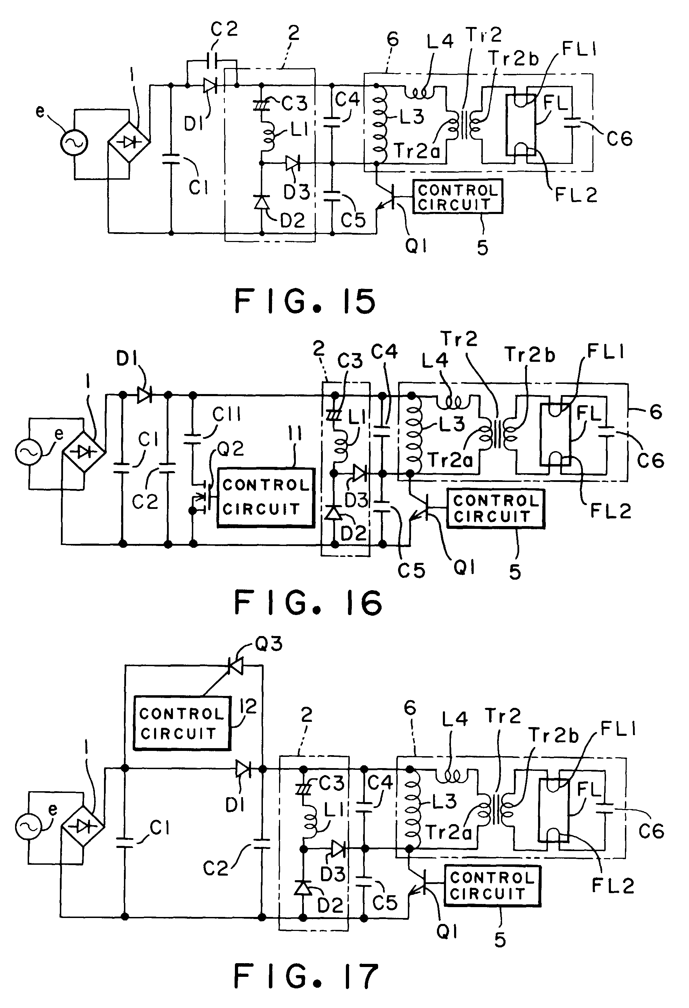

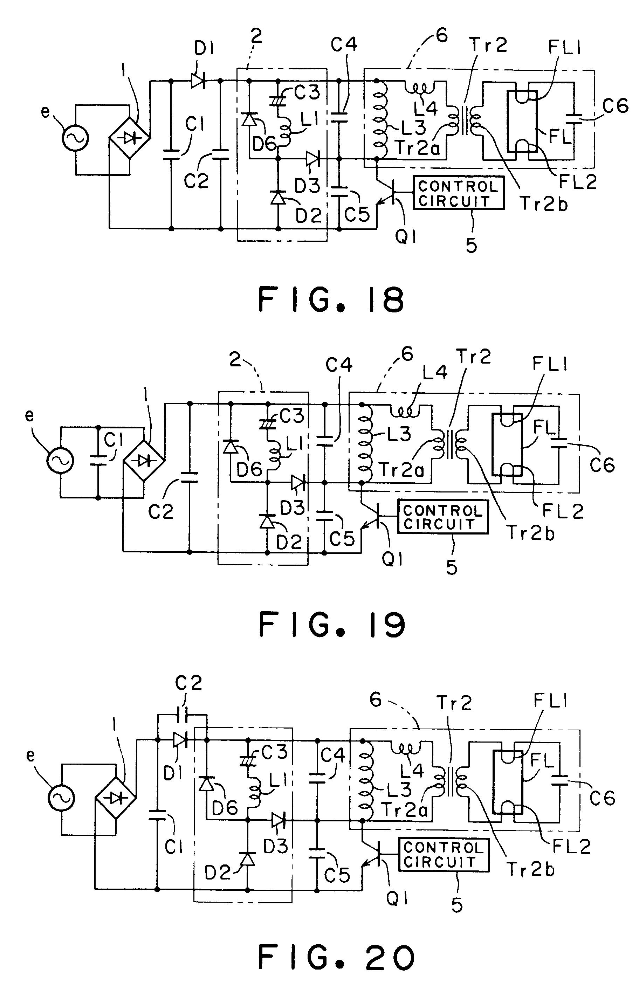

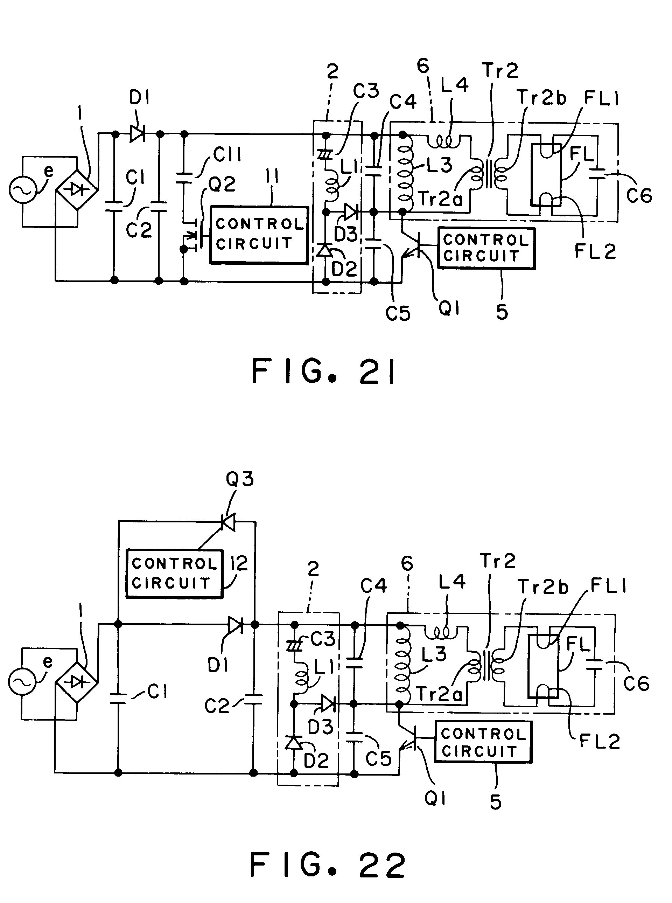

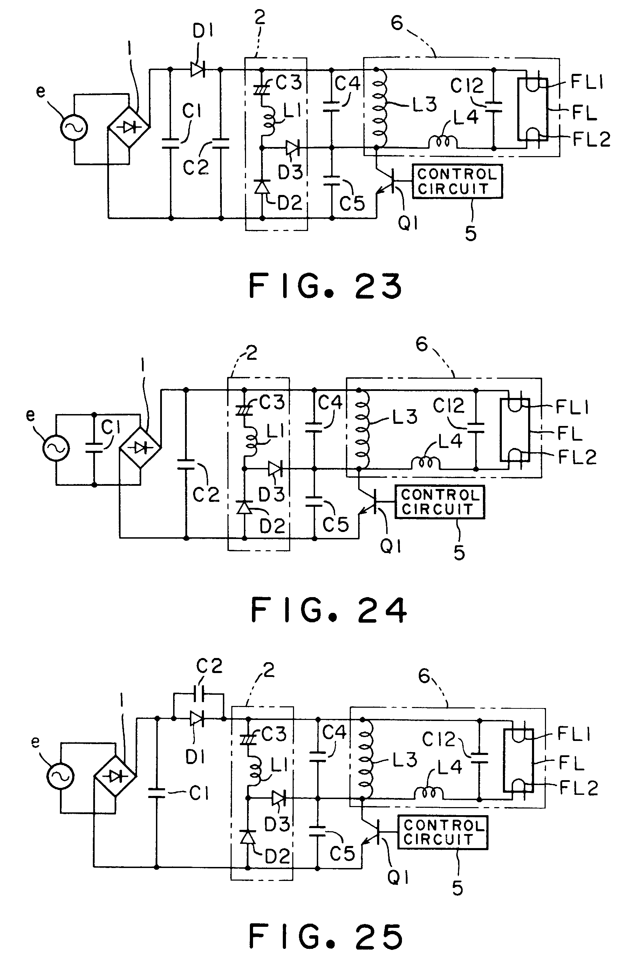

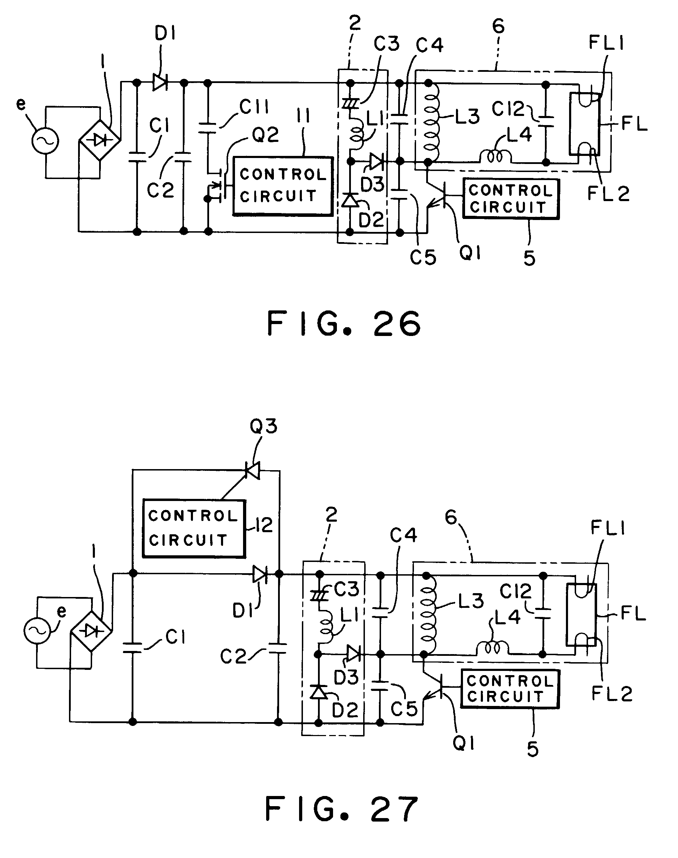

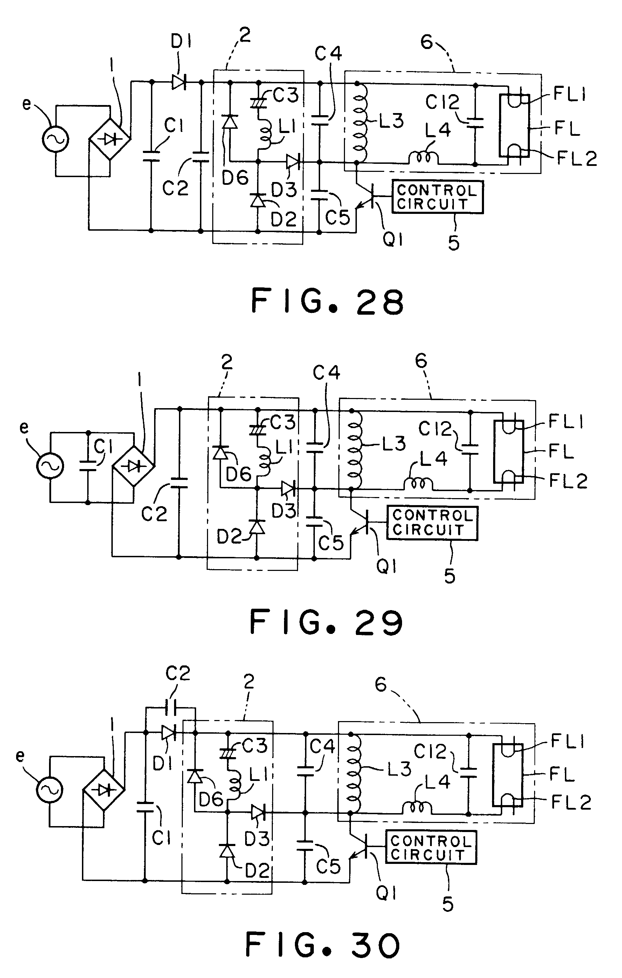

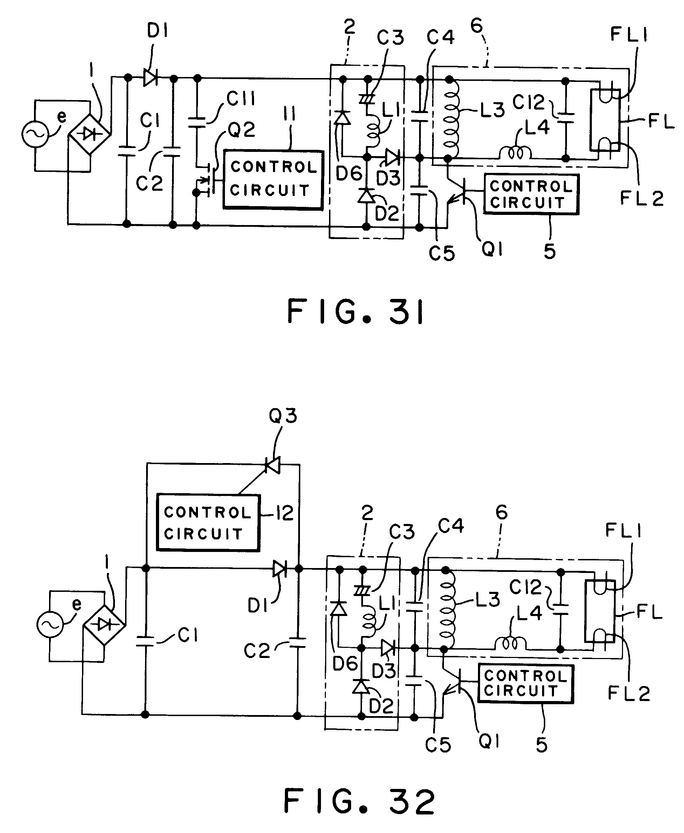

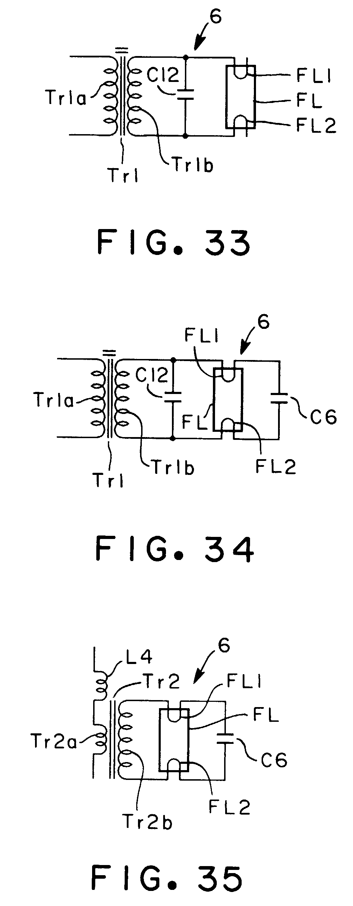

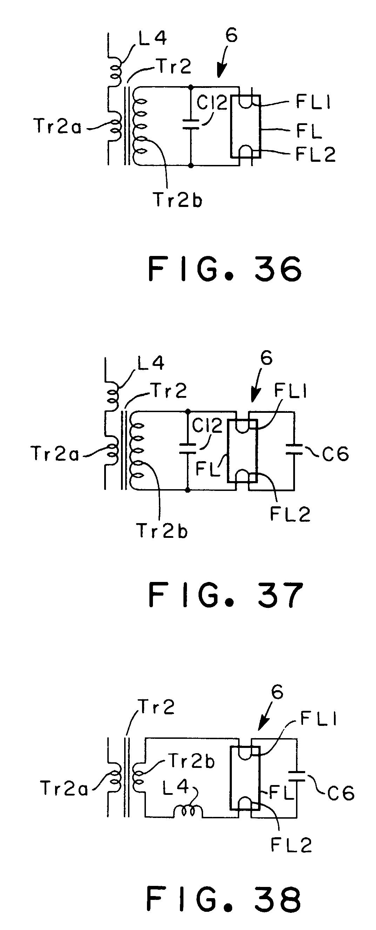

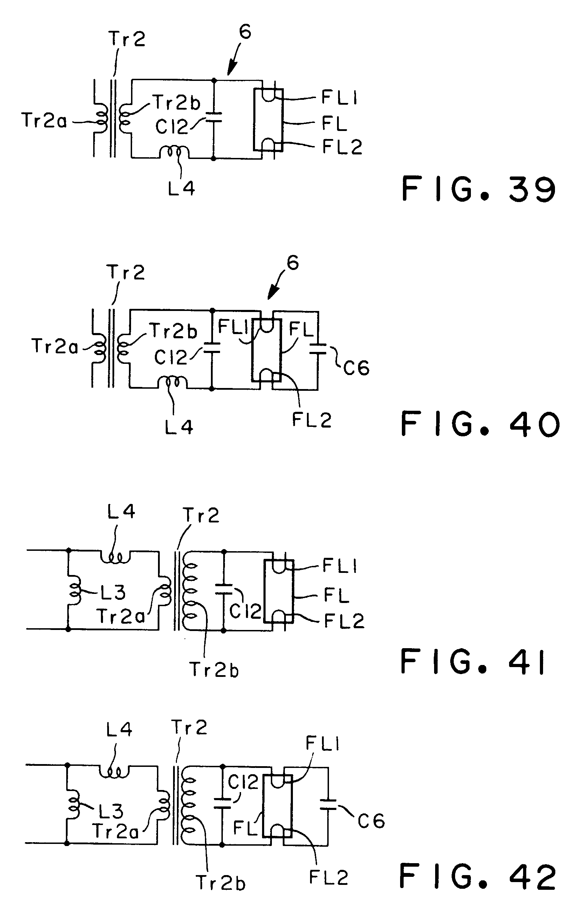

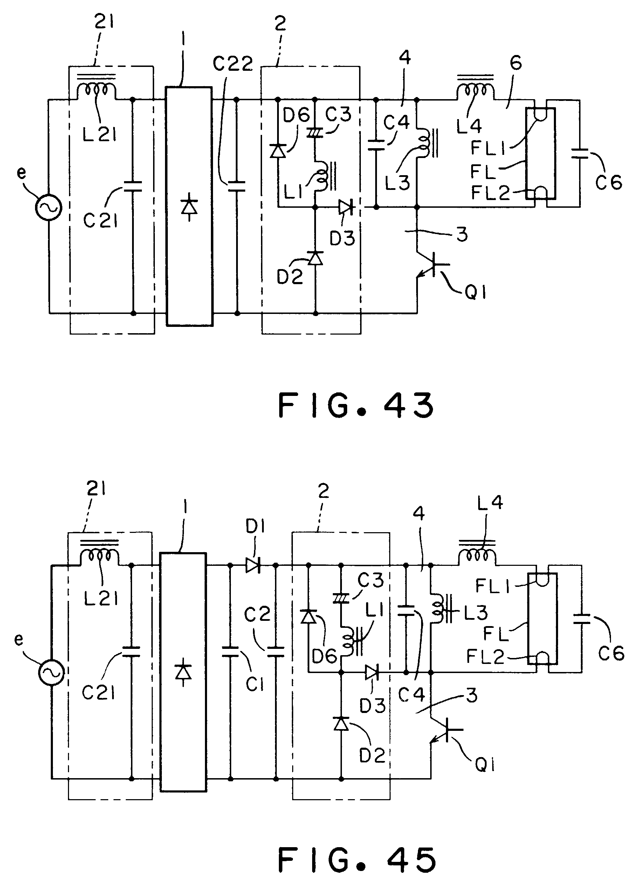

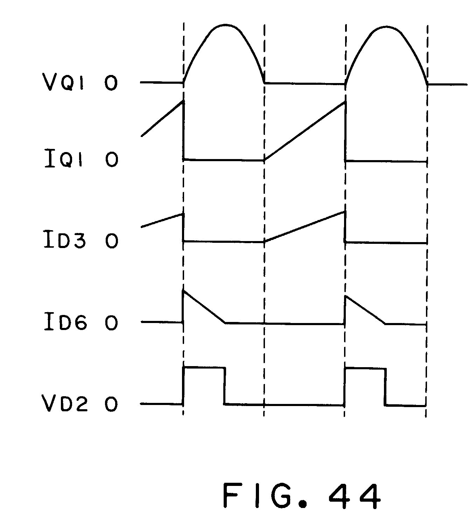

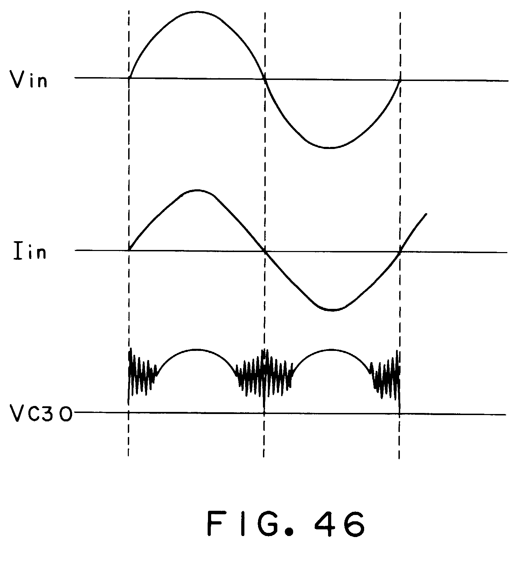

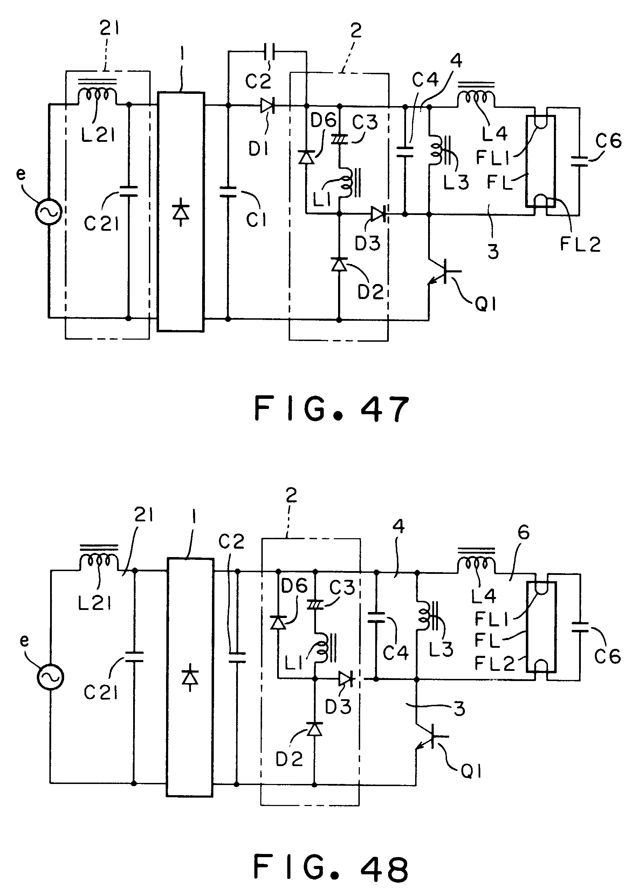

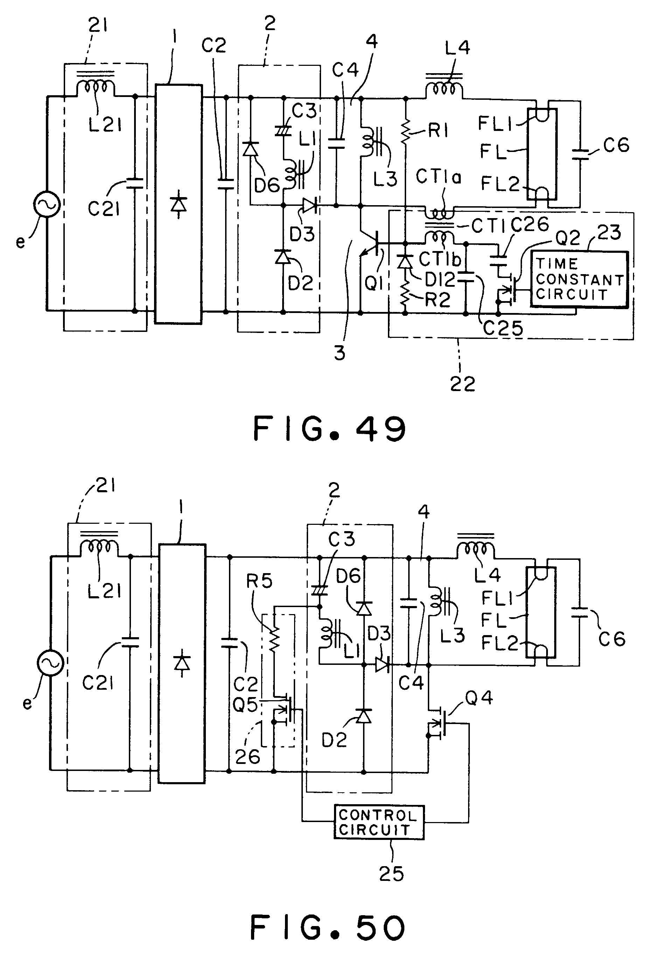

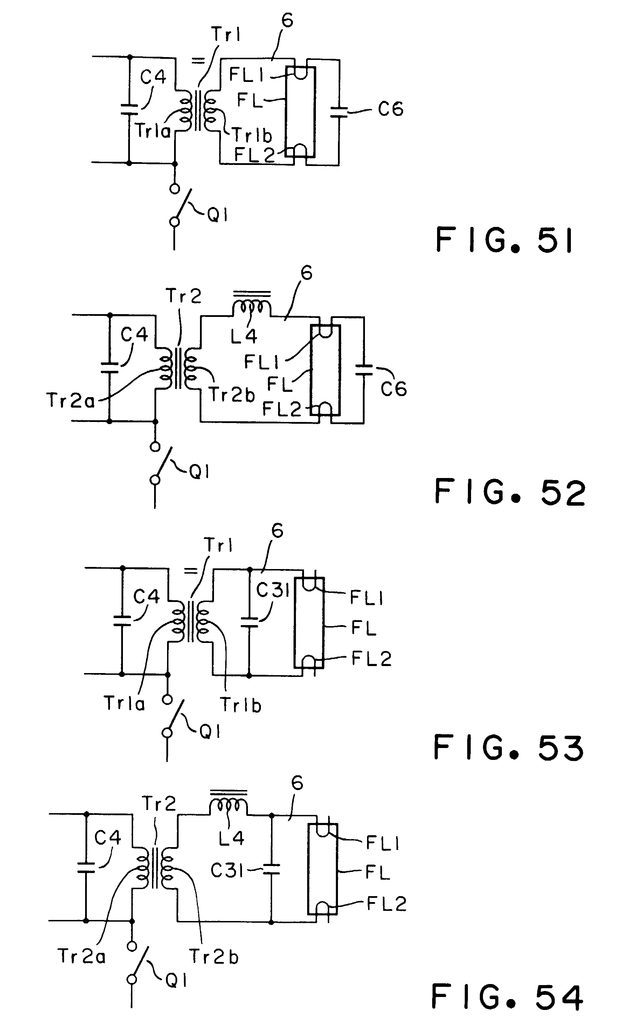

Fig. 1 is a circuit diagram of a discharge lamp lighting device according to a first embodiment of the present invention; Fig. 2 is a waveform illustration of voltage on the second condenser of same; Fig. 3 is a waveform illustration of lamp current of the fluorescent lamp of same; Fig. 4 is a circuit diagram of a discharge lamp lighting device according to a second embodiment of the present invention; Fig. 5 is a circuit diagram of a discharge lamp lighting device according to a third embodiment of the present invention; Fig. 6 is a circuit diagram of a discharge lamp lighting device according to a 4th embodiment of the present invention; Fig. 7 is a circuit diagram of a discharge lamp lighting device according to a 5th embodiment of the present invention; Fig. 8 is a circuit diagram of a discharge lamp lighting device according to a 6th embodiment of the present invention; Fig. 9 is a circuit diagram of a discharge lamp lighting device according to a 7th embodiment of the present invention; Fig. 10 is a circuit diagram of a discharge lamp lighting device according to an 8th embodiment of the present invention; Fig. 11 is a circuit diagram of a discharge lamp lighting device according to a 9th embodiment of the present invention; Fig. 12 is a circuit diagram of a discharge lamp lighting device according to a 10th embodiment of the present invention; Fig. 13 is a circuit diagram of a discharge lamp lighting device according to an 11th embodiment of the present invention; Fig. 14 is a circuit diagram of a discharge lamp lighting device according to a 12th embodiment of the present invention; Fig. 15 is a circuit diagram of a discharge lamp lighting device according to a 13th embodiment of the present invention; Fig. 16 is a circuit diagram of a discharge lamp lighting device according to a 14th embodiment of the present invention; Fig. 17 is a circuit diagram of a discharge lamp lighting device according to a 15th embodiment of the present invention; Fig. 18 is a circuit diagram of a discharge lamp lighting device according to a 16th embodiment of the present invention; Fig. 19 is a circuit diagram of a discharge lamp lighting device according to a 17th embodiment of the present invention; Fig. 20 is a circuit diagram of a discharge lamp lighting device according to an 18th embodiment of the present invention; Fig. 21 is a circuit diagram of a discharge lamp lighting device according to a 19th embodiment of the present invention; Fig. 22 is a circuit diagram of a discharge lamp lighting device according to a 20th embodiment of the present invention; Fig. 23 is a circuit diagram of a discharge lamp lighting device according to a 21st embodiment of the present invention; Fig. 24 is a circuit diagram of a discharge lamp lighting device according to a 22nd embodiment of the present invention; Fig. 25 is a circuit diagram of a discharge lamp lighting device according to a 23rd embodiment of the present invention; Fig. 26 is a circuit diagram of a discharge lamp lighting device according to a 24th embodiment of the present invention; Fig. 27 is a circuit diagram of a discharge lamp lighting device according to a 25th embodiment of the present invention; Fig. 28 is a circuit diagram of a discharge lamp lighting device according to a 26th embodiment of the present invention; Fig. 29 is a circuit diagram of a discharge lamp lighting device according to a 27th embodiment of the present invention; Fig. 30 is a circuit diagram of a discharge lamp lighting device according to an 28th embodiment of the present invention; Fig. 31 is a circuit diagram of a discharge lamp lighting device according to a 29th embodiment of the present invention; Fig. 32 is a circuit diagram of a discharge lamp lighting device according to a 30th embodiment of the present invention; Fig. 33 is a circuit diagram of a load circuit according to a 31st embodiment of the present invention; Fig. 34 is a circuit diagram of a load circuit according to a 32nd embodiment of the present invention; Fig. 35 is a circuit diagram of a load circuit according to a 33rd embodiment of the present invention; Fig. 36 is a circuit diagram of a load circuit according to a 34th embodiment of the present invention; Fig. 37 is a circuit diagram of a load circuit according to a 35th embodiment of the present invention; Fig. 38 is a circuit diagram of a load circuit according to a 36th embodiment of the present invention; Fig. 39 is a circuit diagram of a load circuit according to a 37th embodiment of the present invention; Fig. 40 is a circuit diagram of a load circuit according to a 38th embodiment of the present invention; Fig. 41 is a circuit diagram of a load circuit according to a 39th embodiment of the present invention; Fig. 42 is a circuit diagram of a load circuit according to a 40th embodiment of the present invention; Fig. 43 is a circuit diagram of a discharge lamp lighting device according to a 41st embodiment of the present invention; Fig. 44 is a waveform illustration showing the function of the discharge lamp lighting device according to the 41st embodiment of the present invention; Fig. 45 is a circuit diagram of a discharge lamp lighting device according to a 42nd embodiment of the present invention; Fig. 46 is a waveform illustration showing the function of the discharge lamp lighting device according to the 42nd embodiment of the present invention; Fig. 47 is a circuit diagram of a discharge lamp lighting device according to a 43rd embodiment of the present invention; Fig. 48 is a circuit diagram of a discharge lamp lighting device according to a 44th embodiment of the present invention; Fig. 49 is a circuit diagram of a discharge lamp lighting device according to a 45th embodiment of the present invention; Fig. 50 is a circuit diagram of a discharge lamp lighting device according to a 46th embodiment of the present invention; Fig. 51 is a circuit diagram of a part of a discharge lamp lighting device according to a 47th embodiment of the present invention; Fig. 52 is a circuit diagram of a part of a discharge lamp lighting device according to a 48th embodiment of the present invention; Fig. 53 is a circuit diagram of a part of a discharge lamp lighting device according to a 49th embodiment of the present invention; and Fig. 54 is a circuit diagram of a part of a discharge lamp lighting device according to a 50th embodiment of the present invention.

Next, the configuration of a power supply device according to the first embodiment of the invention is explained hereunder, referring to Fig. 1.

Fig. 1 is a circuit diagram of a discharge lamp lighting device according to the first embodiment of the invention, wherein an input terminal of a full-wave rectifying circuit 1 serving as a rectifying means for a diode bridge is connected to a commercial AC power supply e; a first condenser C1 having a larger capacity is connected to an output terminal of the full-wave rectifying circuit 1; and a series circuit consisting of a diode D1 and a second condenser C2, which has a capacity smaller than the first condenser C1, is connected to the first condenser C1.

The second condenser C2 is also connected to a partially smoothed circuit 2, which comprises a series circuit consisting of a charge condenser C3, an inductor L1 and a diode D2, and a diode D3 disposed between and connected to the inductor L1 and the diode D2.

The partially smoothed circuit is connected to an inverter circuit 3, which includes a parallel circuit consisting of a primary winding Tr1a of a leakage flux type inverter transformer Tr1 and a first resonance condenser C4, the inverter transformer Tr1 serving as a resonance inductor. The inverter circuit 3 also includes a collector-emitter of a transistor Q1 which serves as a switching element. In addition, a second resonance condenser C5 is disposed between and connected to the collector and the emitter of the collector-emitter of the transistor Q1.

Furthermore, a control circuit 5 is connected to the base of the transistor Q1.

Filaments FL1, FL2 of a fluorescent lamp LF serving as a discharge lamp are connected to a secondary winding Tr1b of the inverter transformer Tr1, and a starting condenser C6 is connected to the filaments FL1, FL2.

A load circuit 6 is comprised of the fluorescent lamp FL and other elements.

Next, the function of the embodiment described above is explained hereunder.

When the inverter circuit 3 is actuated to oscillate upon switching of the transistor Q1 by the control circuit 5, resonance of the primary winding Tr1a of the inverter transformer Tr1 and the resonance condenser C4 generates a high frequency voltage, thereby inducing a high frequency voltage also on the secondary winding Tr1b.

When the transistor Q1 is switched on, electric current flows to the primary winding Tr1a of the inverter transformer Tr1 while electric current also flows through the charge condenser C3, the inductor L1 and the diode D3 so that the charge condenser C3 is charged. The device is adapted to store in the charge condenser C3 DC voltage lower than the peak voltage of the pulsating current from the full-wave rectifying circuit 1.

Now, explanation is given of the range where the voltage of the pulsating current from the full-wave rectifying circuit 1 is higher than the charge voltage of the charge condenser C3 and the range where the former is lower than the latter.

When the transistor Q1 of the inverter circuit 3 is switched on in an arbitrary time period in the range where the voltage of the pulsating current in the full-wave rectifying circuit 1 is higher than the voltage charged on the charge condenser C3, electric current is supplied to the primary winding Tr1a of the inverter transformer Tr1 mainly from the first condenser C1 and partly from the second condenser C2. The combined capacity of the first and second condensers C1,C2 is sufficient to give an energy required by the inverter circuit 3. Energy corresponding to the current supplied from the first condenser C1 and the second condenser C2 flows in the form of input current from the commercial AC power supply e. In accordance with changes of the voltage of pulsating current, the device so functions as to cope with switching actions of the transistor Q1 so that, along with increase in value of AC voltage sinusoidal waves, the slight and uniform amplitude of high frequency waves produced by the inverting action of the inverter circuit 3 is superimposed over the entire range where the voltage of the full-wave rectifying circuit 1 is high.

In the range where the voltage on the full-wave rectifying circuit 1 is high, the combined value of respective voltages on the first condenser C1 and the second condenser C2 corresponds to such a value of the energy given by the supplied pulsating current voltage that said energy satisfies the energy required by the inverter circuit 3. Therefore, both the first and second condensers C1,C2 produce only minimal ripples and heat and are ensured to more reliably function.

In the range where the voltage of the full-wave rectifying circuit 1 is high, the charge condenser C3 is charged when the transistor Q1 is on. In the high-voltage range of the full-wave rectifying circuit 1, there is no discharge of current from the changing condenser C3 to the inverter circuit 3. Then, in the range where the voltage of the full-wave rectifying circuit 1 is low, when the transistor Q1 is turned on at the beginning of decrease in pulsating current sinusoidal voltage in the full-wave rectifying circuit with respect to the charging voltage on the charge condenser C3, the electric current to the primary winding Tr1a of the inverter transformer Tr1 is supplied from the second condenser C2 at first. As the capacity of the second condenser C2 is not sufficient to supply the energy necessary for the inverter circuit 3, the voltage on the second condenser C2 decreases with the increase of the current which flows into the primary winding Tr1a after the transistor Q1 is switched on. When the voltage on the second condenser C2 is reduced to the voltage on the first condenser C1, the first condenser C1 starts to feed energy to the inverter circuit 3 to make up for the shortage of the energy supplied by the second condenser C2.

Thus, energy continues to be fed until the transistor Q1 is turned off. During this period, the decrease in voltage on the second condenser C2 slows down after the beginning of energy feed from the first condenser C1. The energy fed from the first condenser C1 causes energy equivalent to the fed energy to flow in the form of input electric current from the commercial AC power supply e.

Meanwhile, due to a transient impedance of the inductor L1, the charging voltage on the charge condenser C3 delays discharging energy; energy discharge is done just before the transistor Q1 is switched off. When the transistor Q1 is switched off, the charged voltage on the charge condenser C3 becomes the source of feeding voltage to the series circuit which consists of the inductor L1, the diode D2 and the second condenser C2. At that time, the charge to the second condenser C2 is conducted in the manner of sinusoidal waves, because the inductor L1 and the second condenser C2 are so constructed as to achieve oscillatory resonance. The charged voltage is increased in the inverter circuit 3 to such a level that an insufficient supply of energy will not occur when the transistor Q1 is switched on next time. As a result of the switching off of the transistor Q1, resonance occurs between the primary winding Tr1a of the inverter transformer Tr1 and the pair of resonance condensers, i. e. the first resonance condenser C4 and the second resonance condenser C5. The resonance current flows along a path formed by the second resonance condenser C5, the primary winding Tr1a of the inverter transformer Tr1, the second condenser C2 and the second resonance condenser C5, and back to the second condenser C2 is charged so that resonance voltage is generated. At that time, as shown in Fig. 2, voltages at both ends of the second condenser C2 become close to DC voltages, the voltage corresponding to the maximum instantaneous voltage of the commercial AC power supply e being approximately equal to the voltage of the minimum instantaneous voltage.

Together with decrease in voltage on the first condenser C1 with respect to the voltage charged on the charge condenser C3, the voltage on the second condenser C2 decreases so that the amplitude produced by the inductor L1 and the second condenser C2 increases. Further, the current continues to be input, although its amount decreases.

As described above, the device is adapted to permit current from the commercial AC power supply e to continue to flow, thereby preventing high harmonic elements from intervening into the input current.

Furthermore, by increasing fluctuation in voltage on the second condenser C2, the crest factor of the waveform of the lamp current of the fluorescent lamp FL is improved as shown in Fig. 3.

Next, the second embodiment of the invention is explained referring to Fig. 4.

Fig. 4 is a circuit diagram of a discharge lamp lighting device according to the second embodiment of the present invention. The discharge lamp lighting device according to the second embodiment of the invention shown in Fig. 4 has the same configuration as that of the discharge lamp lighting device according to the first embodiment shown in Fig. 1 except that the diode D1 is excluded and that the full-wave circuit 1 is disposed between and connected to the first condenser C1 and the second condenser C2.

By excluding the diode D1, the structure of the circuit can be simplified while ensuring virtually the same basic functions.

Next, the third embodiment of the invention is explained referring to Fig. 5.

Fig. 5 is a circuit diagram of a discharge lamp lighting device according to the third embodiment of the present invention. The discharge lamp lighting device according to the third embodiment of the invention shown in Fig. 5 has the same configuration as that of the discharge lamp lighting device according to the first embodiment shown in Fig. 1 except that the second condenser C2 is connected in parallel with the diode D1.

Even with the configuration as above, the basic functions of the device are the same as those of the first embodiment.

Next, the fourth embodiment of the invention is explained referring to Fig. 6.

Fig. 6 is a circuit diagram of a discharge lamp lighting device according to the fourth embodiment of the present invention. The discharge lamp lighting device according to the fourth embodiment of the invention shown in Fig. 6 has the same configuration as that of the discharge lamp lighting device according to the first embodiment shown in Fig. 1 except that a series circuit consisting of a condenser C11 and a field effect transistor Q2 is connected in parallel with the second condenser C2 and that a control circuit 11 is connected to the field effect transistor Q2. With the configuration as above, controlling the field effect transistor Q2 through the control circuit 11 changes the actual capacity combined with that of the second condenser C2. As a result, in cases where output of the inverter circuit 3 changes due to, for example, a change in temperature, the voltage on the low-voltage portion of the second condenser can be reliably reduced to zero by changing the combined capacity of the second condenser C2 and the condenser C11. Thus, by ensuring continuous flow of input current, the device according to the fourth embodiment is capable of more reliably preventing high harmonics.

Further, the same effect can be achieved by adding the above configuration to the third embodiment shown in Fig. 5.

Next, the fifth embodiment of the invention is explained referring to Fig. 7.

Fig. 7 is a circuit diagram of a discharge lamp lighting device according to the fifth embodiment of the present invention. The discharge lamp lighting device according to the fifth embodiment of the invention shown in Fig. 7 has the same configuration as that of the discharge lamp lighting device according to the first embodiment shown in Fig. 1 except that a thyristor Q3 serving as a short-circuiting means is connected in antiparallel with the diode D1 and that a control circuit 12 is connected to a gate of the thyristor Q3.

Under normal circumstances, the inverter circuit 3 is enabled to function by boosting through resonance of the second condenser C2 and the inverter transformer Tr1 of the inverter circuit 3. However, in the event where, for example, the lamp current of the fluorescent lamp FL increases, the thyristor Q3 is turned on to permit the electric current to flow in the direction opposite the diode D1, thereby reducing the voltage through resonance between the inverter transformer Tr1 and the combination of the first and the second condensers C1,C2. By thus changing the resonance point from the one for the resonance with the second condenser C2, the device according to the fifth embodiment alleviates load applied to the transistor Q1.

Further, the same effect can be achieved by adding the above configuration to the third embodiment or the fourth embodiment.

Next, the sixth, seventh and eighth embodiments of the invention are explained referring to Figs. 8 through 10.

Fig. 8 is a circuit diagram of a discharge lamp lighting device according to the sixth embodiment of the present invention; Fig. 9 is a circuit diagram of a discharge lamp lighting device according to the seventh embodiment of the present invention; and Fig. 10 is a circuit diagram of a discharge lamp lighting device according to the eighth embodiment of the present invention. The discharge lamp lighting devices according to the sixth, seventh and eighth embodiments of the invention respectively have the same configurations as those according to the first, second and third embodiments except that a diode D6 is connected in parallel with the series circuit consisting of the charge condenser C3 and the inductor L1 of the partially smoothed circuit 2.

With the configurations as above, the charge condenser C3 can be charged by feeding magnetic energy through the diode D6 to the charge condenser C3. Furthermore, as current flows through the diode D3, the diode D2 receives current only when the charge condenser C3 discharges so that the voltage on the transistor Q1 is applied to the diode D3 while the transistor Q1 is off. As the voltage applied to the inductor L1 and the diode D2 is thus reduced, the device can be made compact.

Next, the ninth embodiment of the invention is explained referring to Fig. 11.

Fig. 11 is a circuit diagram of a discharge lamp lighting device according to the ninth embodiment of the present invention. The discharge lamp lighting device according to the ninth embodiment of the invention has the same configuration as that of the discharge lamp lighting device according to the sixth embodiment except that, as is true in the fourth embodiment, a series circuit consisting of a condenser Cll and a field effect transistor Q2 is connected in parallel with the second condenser C2 and that a control circuit 11 is connected to the field effect transistor Q2.

Further, the same effect can be achieved by adding the above configuration to the seventh embodiment or the eighth embodiment.

Next, the tenth embodiment of the invention is explained referring to Fig. 12.

Fig. 12 is a circuit diagram of a discharge lamp lighting device according to the tenth embodiment of the present invention. The discharge lamp lighting device according to the tenth embodiment of the invention has the same configuration as that of the discharge lamp lighting device according to the sixth embodiment except that, as is true in the fifth embodiment, a thyristor Q3 serving as a short-circuiting means is connected in antiparallel with the diode D1 and that a control circuit 12 is connected to a gate of the thyristor Q3.

Further, the same effect can be achieved by adding the above configuration to the eighth embodiment.

Next, the eleventh, twelfth and thirteenth embodiments of the invention are explained referring to Figs. 13 through 15.

Fig. 13 is a circuit diagram of a discharge lamp lighting device according to the eleventh embodiment of the present invention; Fig. 14 is a circuit diagram of a discharge lamp lighting device according to the twelfth embodiment of the present invention; and Fig. 15 is a circuit diagram of a discharge lamp lighting device according to the thirteenth embodiment of the present invention. The discharge lamp lighting devices according to the eleventh, twelfth and thirteenth embodiments of the invention respectively have the same configurations as those according to the first, second and third embodiments except that a resonant inductor L3 instead of a leakage flux type inverter transformer Tr1 is connected in parallel with the resonance condenser C4; a series circuit consisting of a ballast L4 and a primary winding Tr2a of an insulated type transformer Tr2 is connected in parallel with the resonant inductor L3; and that the fluorescent lamp FL is connected to the primary winding Tr2a of the transformer Tr2.

With the configurations as above, wherein the function of the inverter transformer Tr1 is divided to those of the resonant inductor L3, the ballast L4 and the insulated type transformer Tr2, the devices function basically in the same manner as those according to the first, second and the third embodiments respectively.

Next, the 14th embodiment of the invention is explained referring to Fig. 16.

Fig. 16 is a circuit diagram of a discharge lamp lighting device according to the 14th embodiment of the present invention. The discharge lamp lighting device according to the 14th embodiment of the invention has the same configuration as that of the discharge lamp lighting device according to the eleventh embodiment except that, as is true in the fourth embodiment, a series circuit consisting of a condenser C11 and a field effect transistor Q2 is connected in parallel with the second condenser C2 and that a control circuit 11 is connected to the field effect transistor Q2.

Further, the same effect can be achieved by adding the above configuration to the twelfth embodiment or the thirteenth embodiment.

Next, the 15th embodiment of the invention is explained referring to Fig. 17.

Fig. 17 is a circuit diagram of a discharge lamp lighting device according to the 15th embodiment of the present invention. The discharge lamp lighting device according to the 15th embodiment of the invention has the same configuration as that of the discharge lamp lighting device according to the eleventh embodiment except that, as is true in the fifth embodiment, a thyristor Q3 serving as a short-circuiting means is connected in antiparallel with the diode D1 and that a control circuit 12 is connected to a gate of the thyristor Q3.

Further, the same effect can be achieved by adding the above configuration to the thirteenth embodiment.

Next, the 16th, 17th and 18th embodiments of the invention are explained referring to Figs. 18 through 20.

Fig. 18 is a circuit diagram of a discharge lamp lighting device according to the 16th embodiment of the present invention; Fig. 19 is a circuit diagram of a discharge lamp lighting device according to the 17th embodiment of the present invention; and Fig. 20 is a circuit diagram of a discharge lamp lighting device according to the 18th embodiment of the present invention. The discharge lamp lighting devices according to the 16th, 17th and 18th embodiments of the invention respectively have the same configurations as those according to the 11th, 12th and 13th embodiments except that, in the same manner as the sixth, the seventh and the eighth embodiments respectively, a diode D6 is connected in parallel with the series circuit consisting of the charge condenser C3 and the inductor L1 of the partially smoothed circuit 2.

Next, the 19th embodiment of the invention is explained referring to Fig. 21.

Fig. 21 is a circuit diagram of a discharge lamp lighting device according to the 19th embodiment of the present invention. The discharge lamp lighting device according to the 19th embodiment of the invention has the same configuration as that of the discharge lamp lighting device according to the 16th embodiment except that, as is true in the fourth embodiment, a series circuit consisting of a condenser C11 and a field effect transistor Q2 is connected in parallel with the second condenser C2 and that a control circuit 11 is connected to the field effect transistor Q2.

Further, the same effect can be achieved by adding the above configuration to the 17th embodiment or the 18th embodiment.

Next, the 20th embodiment of the invention is explained referring to Fig. 22.

Fig. 22 is a circuit diagram of a discharge lamp lighting device according to the 20th embodiment of the present invention. The discharge lamp lighting device according to the 20th embodiment of the invention has the same configuration as that of the discharge lamp lighting device according to the 16th embodiment except that, as is true in the fifth embodiment, a thyristor Q3 serving as a short-circuiting means is connected in antiparallel with the diode D1 and that a control circuit 12 is connected to a gate of the thyristor Q3.

Further, the same effect can be achieved by adding the above configuration to the 18th embodiment.

Next, the 21st, 22nd and 23rd embodiments of the invention are explained referring to Figs. 23 through 25.

Fig. 23 is a circuit diagram of a discharge lamp lighting device according to the 21st embodiment of the present invention; Fig. 24 is a circuit diagram of a discharge lamp lighting device according to the 22nd embodiment of the present invention; and Fig. 25 is a circuit diagram of a discharge lamp lighting device according to the 23rd embodiment of the present invention. The discharge lamp lighting devices according to the 21st, 22nd and 23rd embodiments of the invention respectively have the similar configurations to those according to the 16th, 17th and 18th embodiments except that they are simplified by excluding the insulated type transformer Tr2 as well as the condenser C6, which is disposed at the other side of the filaments FL1,FL2 of the fluorescent lamp FL, and connecting a starting condenser C12 to the one side of the filaments FL1,FL2.

With the configuration as above, their basic functions are the same as those according to the 16th, 17th and 18th embodiments except that preheating of the filaments FL1,FL2 is not possible.

Next, the 24th embodiment of the invention is explained referring to Fig. 26.

Fig. 26 is a circuit diagram of a discharge lamp lighting device according to the 24th embodiment of the present invention. The discharge lamp lighting device according to the 24th embodiment of the invention has the same configuration as that of the discharge lamp lighting device according to the 21st embodiment except that, as is true in the fourth embodiment, a series circuit consisting of a condenser C11 and a field effect transistor Q2 is connected in parallel with the second condenser C2 and that a control circuit 11 is connected to the field effect transistor Q2.

Further, the same effect can be achieved by adding the above configuration to the 22nd embodiment or the 23rd embodiment.

Next, the 25th embodiment of the invention is explained referring to Fig. 27.

Fig. 27 is a circuit diagram of a discharge lamp lighting device according to the 25th embodiment of the present invention. The discharge lamp lighting device according to the 25th embodiment of the invention has the same configuration as that of the discharge lamp lighting device according to the 21st embodiment except that, as is true in the fifth embodiment, a thyristor Q3 serving as a short-circuiting means is connected in antiparallel with the diode D1 and that a control circuit 12 is connected to a gate of the thyristor Q3.

Further, the same effect can be achieved by adding the above configuration to the 23rd embodiment.

Next, the 26th, 27th and 28th embodiments of the invention are explained referring to Figs. 28 through 30.

Fig. 28 is a circuit diagram of a discharge lamp lighting device according to the 26th embodiment of the present invention; Fig. 29 is a circuit diagram of a discharge lamp lighting device according to the 27th embodiment of the present invention; and Fig. 30 is a circuit diagram of a discharge lamp lighting device according to the 28th embodiment of the present invention. The discharge lamp lighting devices according to the 26th, 27th and 28th embodiments of the invention respectively have the same configurations as those according to the 21st, 22nd and 23rd embodiments except that, in the same manner as the sixth, the seventh and the eighth embodiments respectively, a diode D6 is connected in parallel with the series circuit consisting of the charge condenser C3 and the inductor L1 of the partially smoothed circuit 2.

Next, the 29th embodiment of the invention is explained referring to Fig. 31.

Fig. 31 is a circuit diagram of a discharge lamp lighting device according to the 29th embodiment of the present invention. The discharge lamp lighting device according to the 29th embodiment of the invention has the same configuration as that of the discharge lamp lighting device according to the 26th embodiment except that, as is true in the fourth embodiment, a series circuit consisting of a condenser C11 and a field effect transistor Q2 is connected in parallel with the second condenser C2 and that a control circuit 11 is connected to the field effect transistor Q2.

Further, the same effect can be achieved by adding the above configuration to the 27th embodiment or the 28th embodiment.

Next, the 30th embodiment of the invention is explained referring to Fig. 32.

Fig. 32 is a circuit diagram of a discharge lamp lighting device according to the 30th embodiment of the present invention. The discharge lamp lighting device according to the 30th embodiment of the invention has the same configuration as that of the discharge lamp lighting device according to the 26th embodiment except that, as is true in the fifth embodiment, a thyristor Q3 serving as a short-circuiting means is connected in antiparallel with the diode D1 and that a control circuit 12 is connected to a gate of the thyristor Q3.

Further, the same effect can be achieved by adding the above configuration to the 28th embodiment.

Next, load circuits 6 according to the 31st through the 40th embodiments of the invention are explained referring to Figs. 33 through 42.

Fig. 33 is a circuit diagram of a load circuit according to the 31st embodiment of the present invention; Fig. 34 is a circuit diagram of a load circuit according to the 32nd embodiment of the present invention; Fig. 35 is a circuit diagram of a load circuit according to the 33rd embodiment of the present invention; Fig. 36 is a circuit diagram of a load circuit according to the 34th embodiment of the present invention; Fig. 37 is a circuit diagram of a load circuit according to the 35th embodiment of the present invention; Fig. 38 is a circuit diagram of a load circuit according to the 36th embodiment of the present invention; Fig. 39 is a circuit diagram of a load circuit according to the 37th embodiment of the present invention; Fig. 40 is a circuit diagram of a load circuit according to the 38th embodiment of the present invention; Fig. 41 is a circuit diagram of a load circuit according to the 39th embodiment of the present invention; and Fig. 42 is a circuit diagram of a load circuit according to the 40th embodiment of the present invention. A load circuit 6 according to any one of the 31st through the 40th embodiments of the invention can be used in any of the discharge lamp lighting devices shown in the first to the 30th embodiments.

A load circuit 6 according to the 31st embodiment of the invention includes a secondary winding Tr1b of a leakage flux type inverter transformer Tr1, to which a starting condenser C12 and an end of the combination of the filaments FL1,FL2 of the fluorescent lamp FL are connected.

In the configuration of a load circuit 6 according to the 32nd embodiment of the invention, a preheating condenser C6 is connected to the other end of the combination of the filaments FL1,FL2 of the fluorescent lamp FL of a load circuit 6 of the 31st embodiment.

In the configuration of a load circuit 6 according to the 33rd embodiment of the invention, a primary winding Tr2a of an insulated type transformer Tr2 is connected through a ballast L4 to said load circuit 6; an end of the combination of the filaments FL1,FL2 of the fluorescent lamp FL is connected to a secondary winding Tr2b of said transformer Tr2; and a condenser C6 is connected to the other end of said combination of the filaments FL1,FL2.

Further, a load circuit 6 according to the 34th embodiment is a load circuit as described in the 33rd embodiment, except that a condenser C12 is connected to the secondary winding Tr2b of the transformer Tr2 and that the condenser C6 is excluded.

Further, a load circuit 6 according to the 35th embodiment is a load circuit as described in the 34th embodiment, except that a condenser C6 is disposed between and connected to the other ends of the respective filaments FL1,FL2 of the fluorescent lamp FL.

In the configuration of a load circuit 6 according to the 36th embodiment of the invention, a secondary winding Tr2b of an insulated type transformer Tr2 is connected through a ballast L4 to said one end of the combination of the filaments FL1,FL2 of the fluorescent lamp FL; and a condenser C6 is connected to the other end of said combination of the filaments FL1,FL2.

In the configuration of a load circuit 6 according to the 37th embodiment of the invention, instead of the condenser C6 of the load circuit 6 according to the 36th embodiment of the invention, a condenser C12 is connected to the one end of the combination of the filaments FL1,FL2.

In the configuration of a load circuit 6 according to the 38th embodiment of the invention, a condenser C6 is connected to the other end of the combination of the filaments FL1,FL2 of the load circuit 6 according to the 37th embodiment.

In the configuration of a load circuit 6 according to the 39th embodiment of the invention, a ballast L4 and a primary winding Tr2a of an insulated type transformer Tr2 are connected to a resonant inductor L3, and a secondary winding Tr2b thereof is connected to a condenser C12 and the one end of the combination of the filaments FL1,FL2 of the fluorescent light FL.

In the configuration of a load circuit 6 according to the 40th embodiment of the invention, a condenser C6 is connected to the other end of the combination of the filaments FL1,FL2 of the load circuit 6 according to the 39th embodiment.

Next, a discharge lamp lighting device according to the 41st embodiment is explained hereunder, referring to Figs. 43 and 44.

Fig. 43 is a circuit diagram of a discharge lamp lighting device according to the 41st embodiment of the invention, wherein a low pass filter 21 adapted to remove harmonics of an inductor L21 and a condenser C21 is connected to a commercial AC power supply e, an input terminal of a full-wave rectifying circuit 1 serving as a rectifying means for a diode bridge is connected to the low pass filter 21, and a condenser C22 for removing harmonics is connected to an output terminal of the full-wave rectifying circuit 1.

The condenser C22 is also connected to a partially smoothed circuit 2, which includes a series circuit consisting of a charge condenser C3, an inductor L1 and a first diode D2. Also included in the partially smoothed circuit 2 are a second diode D3 and a third diode D6, the second diode D3 connected to the connecting point of the inductor L1 and the first diode D2, and the third diode D6 connected in parallel with a series circuit consisting of the inductor L1 and the charge condenser C3.

Connected to the partially smoothed circuit 2 is an inverter circuit 3, which comprises a parallel resonance circuit 4 and a collector-emitter of a transistor Q1 that serves as a switching element, the parallel resonance circuit 4 consisting of a resonance inductor L3 and a first resonance condenser C4. A control circuit (not shown) is connected to the base of the transistor Q1.

Filaments FL1, FL2 of a fluorescent lamp LF serving as a discharge lamp are connected through a ballast L4 to the resonance inductor L3, and a starting condenser C6 is connected to the filaments FL1, FL2.

Furthermore, a load circuit 6 is comprised of the fluorescent lamp FL and other elements.

Next, the function of the embodiment described above is explained hereunder, referring to Fig. 44.

When the inverter circuit 3 is actuated to oscillate upon switching-on of the transistor Q1, resonance of the resonance inductor L3 and the resonance condenser C4 generates a high frequency voltage, thereby inducing a high frequency voltage on the resonance condenser C4.

When the transistor Q1 of the inverter circuit 3 is switched on in an arbitrary time period in the range where the voltage of the pulsating current in the full-wave rectifying circuit 1 is higher than the charge voltage of the charge condenser C3, electric current flows along the path consisting of the charge condenser C3, the inductor L21, the second diode D3, the transistor Q1 and the full-wave rectifying circuit 1 so that the charge condenser c3 is charged. As a result, charge current ID3 flows into the second diode D3. In the high-voltage range of the full-wave rectifying circuit 1, there is no discharge of current from the changing condenser C3 to the inverter circuit 3. When the transistor Q1 is switched off, the magnetic energy stored in the inductor L21 permits current to continue to flow into the inductor L21. Therefore, electric current ID6 for charging the charge condenser C3 flows along the path consisting of the charge condenser C3, the inductor L21 and the third diode D6.

When the third diode D6 is in the 'on' state, the voltage whose value is produced by deducting the voltage charged on the charge condenser C3 from the voltage at both ends of the condenser C22 is applied to the first diode D2 so that the voltage having the same waveform as the voltage VD2 as shown in Fig. 44 is applied to the first diode D2. As the amount of the current flown into the second diode D3 is thus reduced by the third diode D6, the elements can be made compact according to the above configuration.

In an arbitrary time period in the range where the voltage of the pulsating current in the full-wave rectifying circuit 1 is lower than the voltage charged on the charge condenser C3, discharge from the charge condenser C3 causes the inverter circuit 3 to function.

Next, the 42nd embodiment is explained, referring to Figs. 45 and 46.

Fig. 45 is a circuit diagram of a discharge lamp lighting device according to the 42nd embodiment of the invention, which has the same configuration as that of the 41st embodiment except that, instead of a condenser C22, a first condenser C1 having a relatively large capacity is included and that a series circuit consisting of a diode d1 and a second condenser C2, which has a capacity smaller than that of the first condenser C1, is connected in parallel with the first condenser Cl.

Next, the function of the 42nd embodiment is explained, referring to Fig. 46.

When the inverter circuit 3 is actuated to oscillate as a result of the switching-on of the transistor Q1, resonance between the resonance condenser C4 and the resonance inductor L3 generates a high frequency voltage, thereby inducing a high frequency voltage on the resonance inductor L3.

When the transistor Q1 is switched on, electric current flows to the resonance inductor L3 while electric current also flows through the charge condenser C3, the inductor L1 and the diode D3 so that the charge condenser C3 is charged. The device is adapted to store in the charge condenser C3 DC voltage lower than the peak voltage of the pulsating current from the full-wave rectifying circuit 1.

Now, explanation is given of the range where the voltage of the pulsating current from the full-wave rectifying circuit 1 is higher than the charge voltage of the charge condenser C3 and the range where the former is lower than the latter.

When the transistor Q1 of the inverter circuit 3 is switched on in an arbitrary time period in the range where the voltage of the pulsating current in the full-wave rectifying circuit 1 is higher than the charge voltage of the charge condenser C3, electric current is supplied to the resonance inductor L3 mainly from the first condenser C1 and partly from the second condenser C2. The combined capacity of the first and second condenser C1,C2 is sufficient to give an energy required by the inverter circuit 3. Energy corresponding to the current supplied from the first condenser C1 and the second condenser C2 flows in the form of input current from the commercial AC power supply e. In accordance with changes in voltage of the pulsating current, the device so functions as to cope with switching actions of the transistor Q1 so that, along with increase in value of AC voltage sinusoidal waves the slight and uniform amplitude of high frequency waves produced by the inverting action of the inverter circuit 3 is superimposed over the entire range where the voltage on the full-wave rectifying circuit 1 is high.

In the range where the voltage on the full-wave rectifying circuit 1 is high, the combined value of respective voltages on the first condenser C1 and the second condenser C2 corresponds to such a value of the energy given by the supplied pulsating current voltage that said energy satisfies the energy required by the inverter circuit 3.

Therefore, both the first and second condensers C1,C2 produce only minimal ripples and heat and are ensured to more reliably function.

In the range where the voltage on the full-wave rectifying circuit 1 is high, the charge condenser C3 is charged during the period when the transistor Q1 is on. In the high-voltage range of the full-wave rectifying circuit 1, there is no discharge of current from the changing condenser C3 to the inverter circuit 3. To explain it in more detail, when the transistor Q1 is switched on, electric current flows along the path consisting of the charge condenser C3, the inductor L1, the second diode D3 and the transistor Q1 so that the charge condenser C3 is charged. When the transistor Q1 is switched off, the magnetic energy stored in the inductor L1 permits current to continue to flow into the inductor L1. Therefore, electric current for charging the charge condenser C3 flows along the path consisting of the charge condenser C3, the inductor L1 and the third diode D6. When the third diode D6 is in the 'on' state, the voltage whose value is produced by deducting the voltage charged on the charge condenser C3 from the voltage at both ends of the condenser C2 is applied to the first voltage D2 so that the voltage having the same waveform as the voltage VD2 is applied to the first diode D2. As current flown into the second diode D3 is thus reduced by the third diode D6, the elements can be made compact according to the above configuration.

In the range where the voltage on the full-wave rectifying circuit 1 is low, when the transistor Q1 is turned on at the beginning of decrease in pulsating current sinusoidal voltage in the full-wave rectifying circuit 1 with respect to the voltage charged on the charge condenser C3, the electric current to the inverter circuit 3 is supplied from the second condenser C2 at first so that electric current flows along the path consisting of the second condenser C2, the resonance inductor L3 and the transistor Q1 as well as along the path consisting of the ballast L4, the fluorescent lamp FL and the transistor Q1. At that time, the voltage on the second condenser C2 decreases with the increase of the flowing through the transistor Q1. When the voltage on the second condenser C2 becomes lower than the output voltage of the full-wave rectifying circuit 1, in other words the voltage on the first condenser C1, the current to the inverter circuit 3 flows to the first condenser C1, the resonance inductor L3 and the transistor Q1.

Meanwhile, due to a transient impedance of the inductor L1, the voltage charged on the charge condenser C3 delays discharging energy so that energy discharge is done just before the transistor Q1 is switched off. When the transistor Q1 is switched off, the charging voltage on the inductor L21 becomes the source of power supply, and current flows along the path consisting of the charge condenser C3, the second condenser C2 and the first diode D2, thereby discharging the second condenser C2. As a result of the resonance between the inductor L1 and the second condenser C2, the voltage on the charge condenser C3 is superimposed over the resonance voltage, thereby producing a voltage waveform shown in Fig. 46, which is close to that of a DC voltage, with the voltage corresponding to the maximum instantaneous voltage of the commercial AC power supply e being approximately equal to the minimum instantaneous voltage.

When the voltage on the first condenser C1 decreases with respect to the charge voltage on the charge condenser C3, input current continues to flow in, because the diode D1 prevents the electric charge on the charge condenser C3 from flowing into the first condenser C1 so that current flows from the full-wave rectifying circuit 1. As this current flows through the low pass filter 21, the input current waveform Iin approaches the input voltage waveform Vin as shown in Fig. 46. Thus, the device according to the present embodiment is capable of reducing high harmonics.

Next, the 43rd embodiment is explained, referring to Fig. 47. Fig. 47 is a circuit diagram of a discharge lamp lighting device according to the 43rd embodiment of the invention, which has the same configuration as that of the 41st embodiment except that a second condenser C2 is connected in parallel with the diode D1.

Next, the 44th embodiment is explained, referring to Fig. 48.

Fig. 48 is a circuit diagram of a discharge lamp lighting device according to the 44th embodiment of the invention, which has the same configuration as that of the 42nd embodiment except that the diode D1 is excluded and that the full-wave rectifying circuit 1 is disposed between the first condenser C1 and the second condenser C2 and connected thereto.

By excluding the diode D2 as above, the structure of the circuit can be simplified while maintaining the basic functions essentially unchanged.

Further, the 45th embodiment is explained, referring to Fig. 49.

Fig. 49 is a circuit diagram of a discharge lamp lighting device according to the 45th embodiment of the invention, which has the same configuration as that of the 41st embodiment except that a control circuit 22 is included. The control circuit 22 includes a starting resistance R1 connected to the base of the transistor Q1, and a detection winding CT1a of a current transformer CT1 disposed between the resonance inductor L3 and the filament FL2 of the fluorescent lamp FL and connected thereto, wherein an output winding CT1b of the current transformer CT1 is connected through a condenser C25 to the base and the emitter of the transistor Q1. A series circuit consisting of a condenser C26 and a field effect transistor Q2 is connected in parallel with the condenser C25, and a time constant circuit 23 is connected to said field effect transistor Q2. Further, between the base and the emitter of the transistor Q1, a series circuit consisting of a diode D12 and a resistance R2 is disposed and connected thereto.

Next, the function of the 45th embodiment is explained hereunder. A device according to the 45th embodiment essentially functions in the same manner as the 41st embodiment.

According to the 45th embodiment described above, prior to actuation of the inverter circuit 3, the field effect transistor Q2 is turned off by the time constant circuit 23, thereby reducing the apparent combined capacity of the condenser C25 and the condenser C26 to increase the oscillation frequency of the inverter circuit 3 so that the output of the inverter circuit 3 is reduced. After the charge condenser C3 is sufficiently charged, the field effect transistor Q2 is turned on to increase the apparent combined capacity of the condenser C25 and the condenser C26 so that the inverter circuit 3 functions at a normal output level.

By actuating the inverter circuit 3 after the charge condenser C3 is sufficiently charged as described above, a high peak current is prevented from flowing into the inductor L1, the second diode D3, the third diode D6 and the transistor Q1. By thus protecting the transistor Q1 and other elements from stress, the embodiment enables the reduction of the sizes of those elements through reducing the capacity of withstanding voltage. Under normal circumstances, the condensers C25,26 ensure the device to function without the danger of a decrease in efficiency.

Further, the same effect can be achieved by connecting a control circuit 22 to any one of the 42nd, 43rd and 44th embodiments.

Next, the 46th embodiment is explained, referring to Fig. 50.

Fig. 50 is a circuit diagram of a discharge lamp lighting device according to the 46th embodiment of the invention, which has the same configuration as that of the 41st embodiment except that a field effect transistor Q4 is included as a switching element and that a control circuit 25 is connected to said field effect transistor Q4. In addition, an auxiliary charging circuit 26 is connected to the control circuit 25, the auxiliary charging circuit 26 including a series circuit that consists of a resistance R5 and a field effect transistor Q5 serving as a switch and is connected to the connecting point of the charge condenser C3 and the inductor L1.

Next, the function of the 46th embodiment is explained hereunder. A device according to the 46th embodiment essentially functions in the same manner as the 41st embodiment.

According to the 46th embodiment described above, prior to actuation of the field effect transistor Q4, the control circuit 25 turns on the field effect transistor Q5. Then, after the charge condenser C3 is sufficiently charged, the control circuit 25 turns off the field effect transistor Q5 and turns on the field effect transistor Q4, thereby actuating the inverter circuit 3.

By starting the function of the inverter circuit 3 after the charge condenser C3 is sufficiently charged as described above, a high peak current is prevented from flowing into the inductor L1, the second diode D3, the third diode D6 and the transistor Q1. By thus protecting the transistor Q1 and other elements from stress, the embodiment enables the reduction of the sizes of those elements through reducing the capacity of withstanding voltage. In addition, as the control circuit 25 is adapted to control both field effect transistors Q4,Q5, the control is easy. Furthermore, as the auxiliary charging circuit 26 does not function under normal circumstances, there is no danger of a decrease in efficiency.

Further, the same effect can be achieved by connecting a control circuit 22 to any one of the 42nd, 43rd and 44th embodiments.

Next, the 47th through the 50th embodiments of the invention are explained, referring to Figs. 51 through 54.

Fig. 51 is a circuit diagram of a load circuit according to the 47th embodiment of the present invention; Fig. 52 is a circuit diagram of a load circuit according to the 48th embodiment of the present invention; Fig. 53 is a circuit diagram of a load circuit according to the 49th embodiment of the present invention; and Fig. 54 is a circuit diagram of a load circuit according to the 50th embodiment of the present invention. Any one of these embodiments can be used in any of the 41st through the 46th embodiments.

According to the 47th embodiment of the invention, a leakage flux type transformer Tr1 is used instead of the resonance inductor L3 and the ballast L4, with its primary winding Tr1a connected to the resonance condenser C4, and the secondary winding Tr1b connected to an end of the combination of the filaments FL1,FL2 of the fluorescent lamp FL.

According to the 48th embodiment of the invention, a close-coupled transformer Tr2 is used instead of the resonance inductor L3, with its primary winding Tr2a connected to the resonance condenser C4, and the secondary winding Tr2b connected through the ballast L4 to the one end of the combination of the filaments FL1,FL2 of the fluorescent lamp FL.

According to the 49th embodiment of the invention, instead of the starting condenser C6 which is connected to the other end of filaments FL1, FL2 according to the 47th embodiment, a starting condenser C31 is connected to the one end of the combination of the filaments FL1, FL2.

According to the 50th embodiment of the invention, instead of the starting condenser C6 which is connected to the other end of filaments FL1, FL2 according to the 48th embodiment, a starting condenser C31 is connected to the one end of the combination of the filaments FL1, FL2.

Further, in any one of the embodiments described above, the fluorescent lamp FL is not limited to a single lamp, and the same effect can be achieved by connecting a plurality of lamps in series or in parallel.

## Claims

1. A power supply device including:
a rectifying means for rectifying alternating current from an AC power supply;
a first condenser connected in parallel with an output terminal of said rectifying means;
a diode connected in series in the normal polarity with an end of said first condenser;
a second condenser connected in parallel with said first condenser through said diode;
a partially smoothed circuit which includes an inductance element and a charge condenser and is connected in parallel with said second condenser, the second condenser adapted to charge said charge condenser at a voltage lower than the maximum instantaneous voltage output from the rectifying means; and
an inverter circuit which includes a parallel resonance circuit, a switching element and a second resonance condenser and is connected in parallel with said partially smoothed circuit, said parallel resonance circuit having a first resonance condenser and a resonance inductor, said switching element connected in series with said parallel resonance circuit, said second resonance condenser connected in parallel with said switching element, and thus structured inverter circuit adapted to generate high frequency voltage by means of switching actions of said switching element.

2. A power supply device including:
a first condenser connected to an AC power supply;
a rectifying means connected to said first condenser;
a second condenser connected to said rectifying means;
a partially smoothed circuit which includes an inductance element and a charge condenser and is connected in parallel with said second condenser, the second condenser adapted to charge said charge condenser at a voltage lower than the maximum instantaneous voltage output from said rectifying means; and
an inverter circuit which includes a parallel resonance circuit, a switching element and a second resonance condenser and is connected in parallel with said partially smoothed circuit, said parallel resonance circuit having a first resonance condenser and a resonance inductor, said switching element connected in series with said parallel resonance circuit, said second resonance condenser connected in parallel with said switching element, and thus structured inverter circuit adapted to generate high frequency voltage by means of switching actions of said switching element.

3. A power supply device including:
a rectifying means for rectifying alternating current from an AC power supply;
a first condenser connected in parallel with an output terminal of the rectifying means;
a diode connected to said first condenser;
a second condenser connected in parallel with said diode;
a partially smoothed circuit which includes an inductance element and a charge condenser and is connected in parallel with said first condenser through said second condenser and the diode, said second condenser adapted to charge said charge condenser at a voltage lower than the maximum instantaneous voltage output from said rectifying means; and
an inverter circuit which includes a parallel resonance circuit, a switching element and a second resonance condenser and is connected in parallel with said partially smoothed circuit, said parallel resonance circuit having a first resonance condenser and a resonance inductor, said switching element connected in series with said parallel resonance circuit, said second resonance condenser connected in parallel with said switching element, and thus structured inverter circuit adapted to generate high frequency voltage by means of switching actions of said switching element.

4. A power supply device as claimed in claim 1 or claim 3, wherein said power supply device includes a short-circuiting means adapted to short-circuit the diode in accordance with an output level of the rectifying means.

5. A power supply device as claimed in any one of the claims from claim 1 to claim 4, wherein said power supply device includes a capacity varying means for changing the capacity of the second condenser.

6. A power supply device as claimed in any one of the claims from claim 1 to claim 5, wherein the first resonance condenser and the second resonance condenser have nearly the same capacities.

7. A power supply device including:
a rectifying means for rectifying alternating current from an AC power supply;
an inverter circuit which includes a parallel resonance circuit comprising a resonance condenser and a resonance inductor, and a switching element connected in series with said parallel resonance circuit, said inverter circuit adapted to generate high frequency voltage by means of switching actions of said switching element; and
a partially smoothed circuit which includes a series circuit consisting of an inductor, a charge condenser and a first diode, a second diode, and a third diode, said charge condenser adapted to be charged at a voltage lower than the maximum instantaneous voltage output from said rectifying means, said first diode connected in such a polarity as to correspond to that of discharge current from said charge condenser, said second diode disposed between and connected to said switching element and the combination of said inductor and said first diode in such a polarity as to permit current for charging the charge condenser to flow therethrough, and said third diode connected in parallel with said charge condenser and said inductor in such a polarity as to permit magnetic energy accumulated in the inductor to flow to the charge condenser when the charge condenser is charged.

8. A power supply device including:
a rectifying means for rectifying alternating current from an AC power supply;
a first condenser connected in parallel with an output terminal of said rectifying means;
a diode connected in series in the normal polarity with an end of said first condenser;
a second condenser connected in parallel with said first condenser through said diode;
an inverter circuit which includes a parallel resonance circuit comprising a resonance condenser and a resonance inductor, and a switching element connected in series with said parallel resonance circuit, said inverter circuit adapted to generate high frequency voltage by means of switching actions of said switching element; and
a partially smoothed circuit which includes a series circuit consisting of an inductor, a charge condenser and a first diode, a second diode, and a third diode, said charge condenser adapted to be charged at a voltage lower than the maximum instantaneous voltage output from said rectifying means, said first diode connected in such a polarity as to correspond to that of discharge current from said charge condenser, said second diode disposed between and connected to said switching element and the combination of said inductor and said first diode in such a polarity as to permit current for charging said charge condenser to flow therethrough, and said third diode connected in parallel with said charge condenser and said inductor in such a polarity as to permit magnetic energy accumulated in said inductor to flow to said charge condenser when said charge condenser is charged.

9. A power supply device including:
a first condenser connected to an AC power supply;
a rectifying means connected to said first condenser;
a second condenser connected to said rectifying means;
an inverter circuit which includes a parallel resonance circuit comprising a resonance condenser and a resonance inductor, and a switching element connected in series with said parallel resonance circuit, said inverter circuit adapted to generate high frequency voltage by means of switching actions of said switching element; and
a partially smoothed circuit which includes a series circuit consisting of an inductor, a charge condenser and a first diode, a second diode, and a third diode, said charge condenser adapted to be charged at a voltage lower than the maximum instantaneous voltage output from said rectifying means, said first diode connected in such a polarity as to correspond to that of discharge current from said charge condenser, said second diode disposed between and connected to said switching element and the combination of said inductor and said first diode in such a polarity as to permit current for charging said charge condenser to flow therethrough, and said third diode connected in parallel with said charge condenser and said inductor in such a polarity as to permit magnetic energy accumulated in said inductor to flow to said charge condenser when said charge condenser is charged.

10. A power supply device including:
a rectifying means for rectifying alternating current from an AC power supply;
a first condenser connected in parallel with an output terminal of said rectifying means;
a diode connected to said first condenser;
a second condenser connected in parallel with said diode;
an inverter circuit which includes a parallel resonance circuit comprising a resonance condenser and a resonance inductor, and a switching element connected in series with said parallel resonance circuit, said inverter circuit adapted to generate high frequency voltage by means of switching actions of said switching element; and
a partially smoothed circuit which includes a series circuit consisting of an inductor, a charge condenser and a first diode, a second diode, and a third diode, said charge condenser adapted to be charged at a voltage lower than the maximum instantaneous voltage output from said rectifying means, said first diode connected in such a polarity as to correspond to that of discharge current from said charge condenser, said second diode disposed between and connected to said switching element and the combination of said inductor and said first diode in such a polarity as to permit current for charging said charge condenser to flow therethrough, and said third diode connected in parallel with said charge condenser and said inductor in such a polarity as to permit magnetic energy accumulated in the inductor to flow to the charge condenser when the charge condenser is charged.

11. A power supply device as claimed in any one of the claims from claim 7 to claim 10, wherein said power supply device includes a control circuit adapted to set the frequency at which said inverter circuit is driven so that the frequency is higher when the circuit starts to oscillate than during the normal operating period.

12. A power supply device as claimed in any one of the claims from claim 7 to claim 11, wherein said power supply device includes an auxiliary charging circuit adapted to charge said charge condenser by the time said inverter circuit initiates oscillation.

13. A discharge lamp lighting device including:
a power supply device as claimed in any one of the claims from claim 1 to claim 12; and
a discharge lamp or discharge lamps connected to said power supply device.
